# EUROPÄISCHE PATENTSCHRIFT

(11) **EP 3 953 153 B1**
(45) Veröffentlichungstag und Bekanntmachung des Hinweises auf die Patenterteilung: **25.12.2024**
(21) Anmeldenummer: 20734165.2
(22) Anmeldetag: 19.06.2020
(51) Int. Cl.: B29C 65/14, B29C 65/48, B29C 65/50, B29C 65/00, B29L 31/30, B29C 65/18, B29C 65/26

(54) **DURCHSTRAHLSCHWEISSVERFAHREN, DURCHSTRAHLSCHWEISSVORRICHTUNG UND DURCHSTRAHLSCHWEISSANORDNUNG**
TRANSMISSION WELDING METHOD, TRANSMISSION WELDING DEVICE AND TRANSMISSION WELDING ARRANGEMENT
PROCÉDÉ DE SOUDAGE PAR TRANSMISSION, DISPOSITIF DE SOUDAGE PAR TRANSMISSION ET AGENCEMENT DE SOUDAGE PAR TRANSMISSION

(30) Priorität: 30.07.2019 DE 102019120595
(43) Veröffentlichungstag der Anmeldung: 16.02.2022
(73) Patentinhaber: Airbus Operations GmbH, 21129 Hamburg (DE)
(72) Erfinder: VICHNIAKOV, Alexei, 21129 Hamburg (DE)
(74) Vertreter: KASTEL Patentanwälte PartG mbB
(86) Internationale Anmeldenummer: PCT/EP2020/067171
(87) Internationale Veröffentlichungsnummer: WO 2021/018473

(56) Entgegenhaltungen:
- EP-A2- 0 958 128
- EP-B1- 0 958 128
- DE-T2- 69 414 951
- US-A- 3 477 194
- US-A1- 2009 056 865

## Beschreibung

Die Erfindung betrifft ein Durchstrahlschweißverfahren zum Verschweißen eines zumindest teilweise aus thermoplastischem Werkstoff gebildeten ersten Werkstückteils an einer Schweißstelle mit wenigstens einem zweiten Werkstückteil. Weiter betrifft die Erfindung verschiedene alternative Verwendungen eines solchen Durchstrahlschweißverfahrens, insbesondere im Zuge einer Herstellung eines Luftfahrzeugs.

Bei der Herstellung von Verbindungen in Luftfahrzeugstrukturbauteilen, wie insbesondere dem Rumpf eines Flugzeugs oder dergleichen, werden in der Praxis überwiegend Bolzen und Nieten in entsprechend gefertigten Löchern eingesetzt.

Ausgestaltungen der Erfindung wenden sich Verbindungstechniken sowie damit herstellbaren Strukturen zu, die mit geringerem Aufwand als die bisher eingesetzten Verbindungstechniken bzw. Strukturen herstellbar sind, ein geringeres Gewicht mit sich bringen und dennoch zumindest eine vergleichbare oder eine verbesserte Zuverlässigkeit liefern sollen.

Aufgrund des geringen Gewichts und der guten Anpassbarkeit an Lastbedingungen bestehen Bestrebungen, immer mehr Bauteile aus Faserverbundmaterialien, insbesondere mit thermoplastischer Matrix im Fahrzeugbau und im Luftfahrzeugbau zu verwenden. Es ist bereits grundsätzlich bekannt, ein Werkstück aus einem ersten Werkstück aus thermoplastischen Faserverbundmaterial und einem zweiten Werkstück aus thermoplastischen Faserverbundmaterial mittels Schweißen zu verbinden.

So beschreibt die Literaturstelle [1] Potente, H. et al., 1993, "Comparative investigation into the welding of glass-fibre reinforced PES"; Journal of Thermoplastic Composite Materials, Vol. 6, No 2, pp 147-159 eine Verbindung von Werkstückteilen aus thermoplastischen Faserverbundmaterial mittels Infrarotschweißen, wobei die Verbindungsflächen durch Infrarotlampen mit Infrarotlicht bestrahlt werden, um danach aufeinander gepresst zu werden.

Aus der Literaturstelle [2] DE 10 2009 043 376 A1 ist das Verbinden von zumindest teilweise aus thermoplastischem Material gebildeten Werkstückteilen mittels Laserschwei-ßen bekannt.

Aus der Literaturstelle [3] WO 2019/053086 A1 ist das Verbinden von aus thermoplastischem Material gebildeten Werkstückteilen mittels Konduktionsschweißen bekannt.

US 2009 / 0 056 865 A1 offenbart ein Verfahren zum Verkleben eines Werkstücks aus Metall mit einem Werkstück aus Kunststoff.

US 3 477 194 A offenbart ein Verfahren zum Herstellen von Verpackungen.

EP 0 958 128 B1 und DE 694 14 951 T2 offenbaren ein Verfahren zum Schweißen von Kunststoff mittels Infrarotstrahlung.

Der Erfindung liegt die Aufgabe zugrunde, ein Schweißen von zumindest teilweise aus thermoplastischem Material gebildeten Werkstückteilen universeller und mit geringerem apparativem und prozessualem Aufbau zu ermöglichen.

Zum Lösen dieser Aufgabe schafft die Erfindung ein Durchstrahlschweißverfahren nach Anspruch 1.

Vorteilhafte Ausgestaltungen sind Gegenstand der Unteransprüche.

Die Erfindung schafft ein Durchstrahlschweißverfahren zum Verschweißen eines zumindest teilweise aus thermoplastischem Werkstoff gebildeten ersten Werkstückteils an einer Schweißstelle mit wenigstens einem zweiten Werkstückteil, umfassend:
Leiten einer polychromatischen, inkohärenten Infrarotlichtstrahlung durch das erste Werkstückteil zu der Schweißstelle;
a) Verspannen des ersten Werkstückteils und des zweiten Werkstückteils mittels wenigstens eines Spannelements, welches zumindest teilweise für die Infrarotlichtstrahlung transparent ist, und
b) Leiten der Infrarotlichtstrahlung durch das Spannelement zu dem ersten Werkstückteil,
wobei zumindest ein Bereich des ersten Werkstückteils oder das gesamte erste Werkstückteil aus einem thermoplastischen Faserverbundmaterial gebildet ist und dass die Infrarotlichtstrahlung durch das Faserverbundmaterial zu der Schweißstelle geleitet wird.

Vorzugsweise werden bei dem Durchstrahlschweißverfahren wenigstens das erste Werkstückteil und das zweite Werkstückteil an einem Verbindungsbereich verschweißt, um so ein Werkstück zu bilden.

Zumindest ein Bereich des ersten Werkstückteils oder das gesamte erste Werkstückteil sind aus einem thermoplastischen Faserverbundmaterial gebildet und die Infrarotlichtstrahlung wird durch das Faserverbundmaterial zu der Schweißstelle geleitet.

Vorzugsweise umfasst das Durchstrahlschweißverfahren den Schritt: Erzeugen der polychromatischen, inkohärenten Infrarotlichtstrahlung durch eine Infrarotlampe.

Vorzugsweise umfasst das Durchstrahlschweißverfahren den Schritt: Erzeugen der Infrarotlichtstrahlung in einem Wellenlängenbereich von 1,0 bis 3,0 µm, vorzugsweise von 1,2 bis 3,0 µm.

Vorzugsweise umfasst das Durchstrahlschweißverfahren den Schritt: Erzeugen der Infrarotlichtstrahlung als IR-B-Strahlung nach DIN5031.

Vorzugsweise umfasst das Durchstrahlschweißverfahren den Schritt: Bewegen der Infrarotlichtstrahlung über das erste Werkstückteil, um die Werkstückteile kontinuierlich entlang eines Schweißbereichs zu schweißen.

Vorzugsweise umfasst das Durchstrahlschweißverfahren den Schritt: Bewegen einer die Infrarotlichtstrahlung erzeugenden Infrarotlichtquelle über das erste Werkstückteil, um die Werkstückteile kontinuierlich entlang eines Schweißbereichs zu schweißen.

Es ist bevorzugt, dass Schritt a) umfasst: a1) Aufpressen des Spannelements auf das erste Werkstückteil.

Es ist bevorzugt, dass Schritt a) umfasst: a2) Verwenden eines Spannelements aus einem Material, das ausgewählt ist aus der Gruppe aus Materialien, die ein für die Infrarotlichtstrahlung transparentes Material, ein flexibles Material, ein starres Material, Glas, transparenter Kunststoff, Polyimid, Vakuumpackfolie und Silikon und Kombinationen dieser Materialien umfasst.

Es ist bevorzugt, dass Schritt a) umfasst: a3) Verwenden einer Druckplatte oder Spannbacke als Spannelement.

Es ist bevorzugt, dass Schritt a) umfasst: a4) Verwenden eines Spannelements mit wenigstens einem mit einem Fluidmedium befüllten oder befüllbaren Fluidmediumhohlraum.

Es ist bevorzugt, dass Schritt a) umfasst: a5) Verwenden eines flexiblen Spannelements und Steuern des Anpressdrucks des flexiblen Spannelements mittels eines Druckfluids.

Es ist bevorzugt, dass Schritt a) umfasst: a6) Bewegen des Spannelements (26) über das erste Werkstückteil (12).

Es ist bevorzugt, dass Schritt a) umfasst: a7) Verwenden eines um eine Drehachse drehbaren Spannelements (26).

Es ist bevorzugt, dass Schritt a) umfasst: a8) Verwenden eines rollen-, walzen- oder kugelförmigen oder als Rollkörper ausgebildeten Spannelements (26).

Es ist bevorzugt, dass Schritt a) umfasst: a9) Rollen des Spannelements (26) über das erste Werkstückteil (12).

Es ist bevorzugt, dass Schritt a) umfasst: a10) Erzeugen der Infrarotlichtstrahlung (32) im Inneren des als Rollkörper ausgebildeten Spannelements (26).

Es ist bevorzugt, dass Schritt a) umfasst: a11) gemeinsames Bewegen einer Infrarotlichtquelle und des Spannelements (26) über das erste Werkstückteil.

Es ist bevorzugt, dass Schritt a) umfasst: a12) Verwenden eines Spannelements, das mehrere starre Segmente aufweist, die vorzugsweise flexibel aneinandergelenkt sind, um die Topologie des ersten Werkstückteils abzubilden.

Vorzugsweise umfasst das Durchstrahlschweißverfahren den Schritt: c) Einstellen einer Temperatur des Spannelements vor, während und/oder nach Schritt b), um die Temperatur wenigstens eines Bereichs des Werkstücks zu beeinflussen.

Vorzugsweise umfasst wenigstens einer der Schritte a) oder c), insbesondere wenigstens einer der Schritte a1)-a12), mehr insbesondere a4), a5), insbesondere in Verbindung mit Schritt c), den Schritt: Verwenden eines Spannelements mit wenigstens einem Kanal und Leiten eines temperierten Fluidmediums durch den wenigstens einen Kanal.

Vorzugsweise umfasst wenigstens einer der Schritte a) oder c), insbesondere wenigstens einer der Schritte a1)-a12), mehr insbesondere a4), a5), insbesondere in Verbindung mit Schritt c), den Schritt: Durchleiten eines für die Infrarotlichtstrahlung transparenten oder transmissiven Fluidmediums durch das Spannelement.

Vorzugsweise umfasst wenigstens einer der Schritte a) oder c), insbesondere wenigstens einer der Schritte a1)-a12), mehr insbesondere a4), a5), insbesondere in Verbindung mit Schritt c), den Schritt: Vorheizen des Spannelements sowie des Werkstücks zur Verringerung der Heizzeit für das Schweißen.

Vorzugsweise umfasst wenigstens einer der Schritte a) oder c), insbesondere wenigstens einer der Schritte a1)-a12), mehr insbesondere a4), a5), insbesondere in Verbindung mit Schritt c), den Schritt: Nachheizen oder Kühlen des Spannelements sowie des Werkstücks zur Verbesserung der Werkstückqualität oder der Kristallisationsrate.

Vorzugsweise umfasst wenigstens einer der Schritte a) oder c), insbesondere wenigstens einer der Schritte a1)-a12), mehr insbesondere a4), a5), insbesondere in Verbindung mit Schritt c), den Schritt: Steuern einer Druckverteilung mittels Steuern des Drucks des Fluidmediums.

Vorzugsweise umfasst das Durchstrahlschweißverfahren den Schritt: Verschweißen der Werkstoffteile, die jeweils ausgewählt sind aus der Gruppe, die ein faserverstärktes Kunststoffbauteil, ein Bauteil mit einer Matrix aus thermoplastischen Material, ein Bauteil mit einer Matrix aus PPS, ein Bauteil mit einer Matrix aus PEKK, ein Bauteil mit einer Matrix aus PEEK, ein Bauteil mit einer Matrix aus PA, ein Bauteil mit einer Matrix aus PEI, ein Bauteil mit einer Matrix aus LM PAEK, ein Bauteil mit einer Matrix PBI, ein Bauteil mit einer Matrix PE, ein Bauteil mit Verstärkungsfasern in Form eines Gewebes, ein Bauteil mit Verstärkungsfasern in Form eines Geleges, ein Bauteil mit Verstärkungsfasern in Form von unidirektionalen Fasern, ein Bauteil mit Verstärkungsfasern in Form von Kurzfasern, ein Bauteil mit Verstärkungsfasern in Form von Endlosfasern, ein Bauteil mit Verstärkungsfasern aus Kohlenstoff, ein Bauteil mit Verstärkungsfasern aus Glas, ein Bauteil mit Verstärkungsfasern aus Endloskohlenstofffasern, ein Bauteil mit Verstärkungsfasern aus Endlosglasfasern; ein Bauteil mit Verstärkungsfasern aus Kohlenstoff- oder Glaskurzfasern, ein Bauteil mit Verstärkungsfasern aus Aramidfasern, ein Bauteil mit Verstärkungsfasern aus Seide, ein Bauteil mit Verstärkungsfasern aus Fasern aus einer biologischen Quelle, ein Bauteil mit Verstärkungsfasern aus Keramik, umfasst.

Vorzugsweise umfasst das Durchstrahlschweißverfahren den Schritt: Verschweißen des ersten Werkstückteils und des zweiten Werkstückteils in Überlappung oder Teilüberlappung.

Vorzugsweise umfasst das Durchstrahlschweißverfahren den Schritt: Verschweißen des ersten Werkstückteils und des zweiten Werkstückteils im Stumpfstoß.

Vorzugsweise umfasst das Durchstrahlschweißverfahren den Schritt: Einfügen einer Zwischenschicht zwischen den Werkstückteilen vor dem Schweißen.

Vorzugsweise wird das Durchstrahlschweißverfahren verwendet zum Erzeugen von Längs- und/oder Umfangsverbindungen an einem Fahrzeug- oder Luftfahrzeugrumpf oder -bauteil.

Vorzugsweise wird das Durchstrahlschweißverfahren verwendet zum Anschweißen von Befestigungselementen, Clips, Bügeln, Klammern oder Klemmen an eine Rumpfstruktur oder Haut eines Fahrzeugs oder Luftfahrzeugs.

Vorzugsweise wird das Durchstrahlschweißverfahren verwendet zum Schweißen eines Rahmens eines Fahrzeugs oder Luftfahrzeugs.

Vorzugsweise wird das Durchstrahlschweißverfahren verwendet zum Anschweißen einer Haut an einen Rahmen bei einem Fahrzeug oder Luftfahrzeug.

Vorzugsweise wird das Durchstrahlschweißverfahren verwendet zum Anschweißen von Stringern oder Spanten an eine Haut eines Fahrzeugs oder Luftfahrzeugs.

Vorzugsweise wird das Durchstrahlschweißverfahren verwendet zum Schweißen von Strukturbauteilen zum Bilden einer Einfassung einer Tür eines Fahrzeugs oder Luftfahrzeugs.

Vorzugsweise wird das Durchstrahlschweißverfahren verwendet zum Schweißen von Bodenstrukturen eines Fahrzeugs oder Luftfahrzeugs.

Vorzugsweise wird das Durchstrahlschweißverfahren verwendet zum Schweißen von Kupplungselementen zum Koppeln von Strukturelementen eines Fahrzeugs oder Luftfahrzeugs.

Vorzugsweise wird das Durchstrahlschweißverfahren verwendet zum Schweißen eines Fensterrahmens an eine Haut eines Fahrzeugs oder Luftfahrzeugs.

Vorzugsweise wird das Durchstrahlschweißverfahren verwendet zum Schweißen einer Verstärkungsstruktur an ein Strukturbauteil eines Fahrzeugs oder Luftfahrzeugs.

Die Erfindung oder deren Ausgestaltungen könnten auch in anderen Strukturen umgesetzt oder verwendet werden, zum Beispiel in Landfahrzeugen, Schiffen, Gebäuden, technischen Konstruktionen aus thermoplastischen Werkstoffen. Auch in Luftfahrzeugen können die Erfindung oder deren Ausgestaltungen nicht nur in Flugzeugen, sondern auch in Helikoptern, Drohnen, Flugautos, Flugtaxis sowie in Raketen und Satelliten verwendet werden.

Die Erfindung bezieht sich auf Infrarot-Durchstrahlschweißen.

Im Stand der Technik sind ein Infrarotschweißen unter Bestrahlung der zu verbindenden Kontaktflächen mit Infrarotstrahlung und anschließendem Zusammenpressen, ein Laserschweißen und ein Schweißen mittels Konduktionswärme (lokale Co-Konsolidation) bekannt.

Bevorzugte Ausgestaltungen der Erfindung kombinieren die Vorteile dieser Verfahren, erlauben jedoch eine vereinfachte Ausrüstung und ein größeres Anwendungsgebiet. So können Schweißverbindungen auch dort durchgeführt werden, wo sie bisher aus technischen Gründen nicht möglich oder nicht wirtschaftlich waren.

Untersuchungen haben ergeben, dass auch mit einer einfacheren Infrarotlichtquelle ohne Verwendung eines Lasers ein Durchstrahlschweißen durch einen Werkstückbereich aus thermoplastischem Werkstoff, insbesondere thermoplastischen Faserverbundwerkstoff, möglich ist und qualitative Schweißverbindungen erreichbar sind.

Insbesondere betrifft die Erfindung Vorrichtungen, Verfahren und Anordnungen zum Infrarotdurchstrahlschweißen bei thermoplastischen Materialien.

Gegen bisher, insbesondere im Bereich der Luftfahrzeugherstellung, üblichen Befestigungsmethoden mit gebohrten Löchern und Überlapp- und Stoßverbindungen mit Bolzen oder Nieten ergeben sich durch Ausführungsformen der Erfindung die Vorteile einer geringeren Komplexität der Prozesskette mit einer geringeren Anzahl von Schritten.

Es sind bei den Ausführungsformen der Erfindung keine Bohrungen, insbesondere keine Bohrungen innerhalb eines Rumpfes eines Fahrzeugs wie insbesondere Luftahrzeuge nötig. Dadurch fallen teils unter schwierigen Arbeitsbedingungen durchzuführende Bohrarbeiten weg, und es ergeben sich bessere Möglichkeiten einer Automation.

Aufgrund des Wegfalls von zerspanenden Arbeiten vor der Verbindung ergibt sich eine geringere Staubentwicklung, insbesondere reduziert sich der Anfall von Kohlenstoffstaub.

Bei Ausgestaltungen der Erfindung ergibt sich eine dichtende Verbindung, so dass keine zusätzlichen Dichtungen für einen hermetischen Abschluss mehr benötigt werden.

Bei Ausgestaltungen der Erfindung ergeben sich - insbesondere verglichen mit konventionellen Verbindungstechniken, bei denen Teile über Bolzenverbindungen mit Abstandsstücken oder Beilagscheiben auszugleichen sind - geringere Vorlaufzeiten.

Bei Ausgestaltungen der Erfindung wird das Schneiden von Fasern bei miteinander zu verbindenden Faserverbundwerkstoffen vermieden und es gibt kein Delaminationsrisiko.

Thermoplastische Materialien und thermoplastische Technologien werden in Zukunft immer mehr für den Aufbau von leichtgewichtigen Strukturen, insbesondere Faserverbundstrukturen und mehr insbesondere im Fahrzeugbau und Luftfahrzeugbau eingesetzt.

Thermoplastische Materialien und Technologien bieten die Möglichkeit sehr großer Änderungen bei der Herstellung von Luftfahrzeugstrukturen und der Anordnung von Luftfahrzeugstrukturen. Die thermoplastischen Materialien, die mittels der Ausgestaltungen der Erfindung miteinander verschweißbar sind, ermöglichen das thermoplastische Verformen von elementaren Bauteilen. Hauptlaminate lassen sich schnell aufeinanderlegen. Es gibt sehr kurze Konsolidationszyklen, und es werden keine Reinräume, Gefriervorrichtungen oder Autoklaven benötigt.

Die thermoplastischen Materialien lassen sich miteinander verschweißen, so dass Bohrarbeiten signifikant reduziert werden können, teure Befestiger und Bolzen signifikant reduziert werden können und weitere Hilfsmaterialien sowie Ausschuss oder Abfall signifikant reduziert werden können.

Demnach bieten thermoplastische Materialien und Technologien eine beträchtliche Möglichkeit zur Kostenreduktion für die Herstellung und den Zusammenbau von Luftfahrzeugen, insbesondere Flugzeugen sowie deren Struktur.

Besonders bevorzugt werden Werkstückteile aus thermoplastischen Faserverbundmaterialien miteinander verschweißt. Die Werkstückteile sind vorzugsweise mit durchgängigen Fasern verstärkt.

Ein Verschweißen von thermoplastischen Materialien, die mit Durchgangsfasern oder Endlosfasern verstärkt sind, ist ein besonders vorteilhafter Verbindungsprozess. Vorzugsweise erfolgt die Verbindung durch Schweißen unter Anwendung von Hitze und Druck. Mehr insbesondere kann das Verschweißen mit oder ohne Verwendung von Füllmaterialien oder Hilfsmaterialien in dem Schweißbereich durchgeführt werden.

Besonders bevorzugt erfolgt ein Schweißen von thermoplastischen Materialien. Mit Schweißen wird insbesondere ein Verbindungsprozess bezeichnet, bei dem zwei oder auch mehr Teile zu einem Werkstück zusammengefügt werden, wobei eine Kontinuität in der Beschaffenheit des Werkstückmaterials durch Anwendung von Hitze oder Druck oder von beidem erzeugt wird. Dies kann mit Verwendung von Füllmaterial oder ohne Verwendung von Füllmaterial erfolgen.

Im Gegensatz zu bisher bekannten Infrarotschweißverfahren wird bei den Ausgestaltungen der Erfindung eine Infrarotstrahlung durch einen Bereich des aus den miteinander zu verbindenden Werkstückteilen gebildeten Werkstücks hindurchgeleitet. Die Infrarotstrahlung geht durch diesen Bereich hindurch bis zur Schweißstelle. Die Werkstückteile können somit bereits vor dem Verschweißen aneinandergepresst werden, und die danach mit Infrarotlichtstrahlung bestrahlt werden. So kann eine Infrarotlichtquelle außen angeordnet werden, und es lassen sich weitaus mehr Verbindungen durch ein solches Schweißverfahren wirtschaftlich herstellen als mit der bisher bekannten Infrarotschweißtechnologie.

Insbesondere lässt sich in der Schweißstelle durch Anwendung von Druck und anschließendem Durchleiten von Infrarotstrahlung eine lokale Erwärmung an der Schweißstelle erreichen, so dass an der Schweißstelle eine makromolekulare Interdiffusion bis hin zur völligen Diffusion der Makromoleküle der beiden Schweißpartner erreichbar ist.

Gegenüber Laserschweißverfahren ergibt sich der Vorteil, dass Infrarotlichtquellen mit besonders bevorzugten Wellenlängenbereichen, in denen die zu verschweißenden thermoplastischen Materialien besonders gut transmissiv sind, einfach und kostengünstig erhältlich sind. Die Infrarotlichtquellen zum Erzeugen der erfindungsgemäßen Infrarotlichtstrahlung sind weitaus kostengünstiger erhältlich als Laser und lassen sich leichter transportieren und leichter handhaben.

Bei einer vorteilhaften Ausgestaltung des Infrarot-Durchstrahlschweißverfahrens werden die miteinander zu verbindenden Werkstückteile in einer Klemmvorrichtung zueinander positioniert. Ein erstes Teil der Klemmvorrichtung - im Folgenden Spannelement genannt - sollte für die Infrarotlichtstrahlung transparent sein. Bei einigen Ausgestaltungen der Erfindung ist dieses erste Teil der Klemmvorrichtung - Spannelement - flexibel.

Bei einigen Ausgestaltungen wird zwischen die miteinander zu verbindenden Werkstückteile eine Zusatzschicht eingefügt. Dies kann beispielsweise eine Matrixschicht oder eine Funktionsschicht - z.B. Metallgitter, Schicht mit Leiterbahnen, Schicht zur Verbesserung der Verschmelzung, usw. - sein. Eine derartige Schicht könnte auch bereits in eines der Werkstückteile integriert sein.

Vorzugsweise wird über die Klemmeinrichtungen der Klemmvorrichtung - insbesondere das Spannelement und ein Gegenspannelement, wie z. B. eine feste Auflage - ein mechanischer Druck auf die Anordnung aus dem ersten Werkstückteil und einem zweiten Werkstückteil ausgeübt. Diese Anordnung sowie das durch das Verschweißen erhaltene Produkt wird im Folgenden auch Werkstück genannt.

Vorzugsweise wird eine Infrarotheizquelle über dem infrarottransparenten Spannelement platziert. Bei einer anderen Ausgestaltung, insbesondere einer Ausgestaltung, bei der das Spannelement als Rollkörper ausgebildet ist, ist die Infrarotlichtquelle in dem Spannelement vorgesehen. Z.B. umgibt das Spannelement die Infrarotlichtquelle und ist drehbar aufgehängt, so dass es durch Abrollen über das erste Werkstück bewegbar ist.

Infrarotheizen wird als Durchgangsheizquelle angewendet und geht durch das transparente Spannelement auf das erste Werkstückteil.

Das Infrarotheizen heizt das erste Werkstückteil auf. Dies kann auch teilweise als Oberflächenheizen und teilweise als durch Transmission das erste Werkstückteil durchdringende Infrarotlichtstrahlung erfolgen. Die Heizwärme wird so bis zu der Schweißstelle - Verbindungsbereich - und in das zweite Werkstück geleitet.

Die Energie des Infrarotheizens führt zu einem Erhitzen des Verbindungsbereiches - Schweißstelle - bis hin zu einem Schmelzen des ersten Werkstückes und evtl. des Verbindungsbereiches des zweiten Werkstückes oder der Zusatzschicht in diesem Bereich.

Bei einigen Ausgestaltungen erfolgt ein Infrarot-Durchstrahlschweißen mit einer Heizunterstützung durch ein Fluidmedium. Eine Heizunterstützung durch ein Fluidmedium lässt sich insbesondere dadurch realisieren, dass wenigstens eines der Teile einer Klemmvorrichtung einen oder mehrere Kanäle für das Fluidmedium aufweisen.

In diesen Kanälen kann während des Schweißprozesses Fluidmedium zur Verbesserung der Temperatur und Druckverteilung vorgesehen werden. Bei einigen Ausgestaltungen wird ein flüssiges Medium durch den wenigstens einen Kanal durchgeleitet, bei einigen Ausgestaltungen liegt das Fluidmedium als Gas, z.B. in Form von Druckluft oder Heizluft oder Kühlluft vor.

Falls das transparente Spannelement derartige Fluidmedium-Kanäle aufweist, ist es vorteilhaft, wenn das Fluidmedium transparent und/oder transmissiv für Infrarotlicht ist. Hierzu geeignete flüssige Fluidmedien sind z. B. Öle, die hochtemperaturresistent sind, oder Wasser.

Vorzugsweise wird die Temperatur des Fluidmediums gesteuert. Insbesondere kann eine Kühleinrichtung und/oder Heizeinrichtung zum Kühlen und/oder Heizen des Fluidmediums in einer Infrarot-Durchstrahlschweißvorrichtung gemäß einer Ausgestaltung der Erfindung vorgesehen sein.

Eine Steuerung der Temperatur dieses Fluidmediums erlaubt z. B., die Heizzeit durch ein Vorheizen von Fluidmedium zu reduzieren oder die Schweißzeit durch ein zusätzliches Heizen des Fluidmediums zu reduzieren und/oder eine bessere Konsolidierung oder Kristallisierung durch nachfolgend erfolgende Temperatursteuerung, insbesondere Nachheizen oder Steuerung der Abkühlrate, schaffen.

Insbesondere dann, wenn das Spannelement zumindest teilweise aus flexiblem Material, z. B. Silikon oder Polyimid, wie Kapton^{®}, gebildet ist, lässt sich durch ein Fluidmedium, welches mit gesteuertem Druck durch das Spannelement geleitet wird, eine Druckaufwendung auf das Werkstück steuern. Durch Steuerung des Drucks innerhalb mehrerer durch das Spannelement laufenden Kanälen kann Druck gezielt aufgewandt werden. Beispielsweise kann der Druck flexibel über dem gesamten Schweißbereich aufgewandt werden. Durch Steuerung der Auferlegung von Druck kann die Steuerung des Schweißprozesses verbessert werden. Insbesondere kann dies durch Steuerung des Drucks des Fluidmediums erfolgen.

Einige Hauptvorteile der Verfahren, Vorrichtungen und Anordnungen gemäß der Erfindung oder deren vorteilhaften Ausgestaltungen werden im Folgenden näher erläutert.

Es ist nur eine einfache und kostengünstige Ausrüstung erforderlich.

Es besteht die Möglichkeit, einen kontinuierlichen Prozess zu verwenden.

Zum Beispiel könnten eine oder mehrere Infrarotlichtquellen innerhalb einer transparenten Röhre angeordnet werden, und diese Röhre kann über das Werkstück bewegt werden.

Eine Bewegung der wenigstens einen Infrarotlichtquelle, des Spannelements oder auch eine gemeinsame Bewegung wenigstens einer Infrarotlichtquelle und des Spannelements, z.B. gemäß der voranstehenden Konfiguration, erlaubt eine einfache Möglichkeit der Anwendung eines kontinuierlichen Schweißprozesses.

Die Röhre könnte starr, z.B. aus Glas oder Ähnlichem, ausgebildet sein. Die Röhre könnte auch flexibel (z.B. aus Silikon oder Polyimid) oder Ähnlichem ausgebildet sein.

Auch andere Formen als eine Röhre sind möglich. Vorzugsweise ist das Spannelement dabei Rollkörper ausgebildet. Das Spannelement könnte auch eine Kette von starren Segmenten aufweisen, die flexibel aneinandergelenkt sind (wie Panzerketten).

Ein auf das als Röhre oder dergleichen Rollkörper ausgebildete Spannelement ausgeübter Druck lässt sich als Schweißdruck beim Abrollen oder sonstigen Bewegen auf die zu verbindenden Werkstückteile übertragen.

Der Innenraum des z.B. als Rollkörper oder dergleichen ausgebildeten beweglichen Spannelements könnte als Fluidmediumkanal dienen oder einen oder mehrere Fluidmediumkanäle aufweisen. So kann die Röhre z.B. temperiert werden.

Insbesondere bei Verwendung von flexiblem Material für die Röhre oder den sonstigen Rollkörper könnte die Röhre oder dergleichen im Inneren mit Druckfluid beaufschlagt werden. Damit lässt sich insbesondere der Anpressdruck steuern.

Vorteilhafterweise werden bei Ausgestaltungen der Erfindung eine oder mehrere Infrarotlichtquellen im Inneren einer transparenten flexiblen Röhre angeordnet. Durch Bewegen einer solchen Röhre lässt sich Anpressdruck über größere Oberflächen während eines kontinuierlichen Schweißens aufbringen. Die Röhre ist vorzugsweise zumindest bereichsweise aus einem flexiblen Material wie Silikon, Polyimid oder einem sonstigen Folienmaterial, wie es auch für Vakuumverpackungsfolien eingesetzt wird, die auch im Bereich der Herstellung von Faserverbundbauteilen eingesetzt werden. Vorzugweise werden Materialien mit einer Temperaturbeständigkeit über der Schmelztemperatur des thermoplastischen Materials des ersten Werkstücks verwendet. Andererseits kann die Röhre durch Kühlfluid gekühlt werden.

Als Druck innerhalb der Röhre wird vorzugsweise ein Wert von 1 bis 10 bar, bevorzugt 4 bis 8 Bar eingestellt. Eine Schweißkraft wird auf die Röhre aufgebracht und auf die zu verbindenden Werkstückteile übertragen.

Es besteht auch die Möglichkeit, einen halb-kontinuierlichen Prozess zu verwenden.

Es ist kein aufwändiger Schutz - wie zum Beispiel im Vergleich zu Lasern - notwendig.

Es ist kein spezielles Werkzeug mit Hochgeschwindigkeitsbewegungen und Druckanwendungen wie bei bisher üblichen Infrarotschweißverfahren notwendig.

Speziell für eine industrielle Anwendung erlaubt diese Technologie, Schweißverbindungen auch dort einzusetzen, wo nur eingeschränkter Zugang besteht.

Zusätzlich bestehen Vorteile, dass Längsverbindungen, insbesondere in Rümpfen oder sonstigen Bauteilen von Luftfahrzeugen, ohne Bohren und ohne Schneiden von Rahmen oder sonstigen Strukturelementen vorgesehen werden können.

Im Folgenden werden Vorteile des Verfahrens, der Vorrichtung und der Anordnung gemäß der Erfindung und/oder deren vorteilhaften Ausgestaltungen gegenüber bisher bekannten Infrarotschweißverfahren erläutert.

Bei Ausgestaltungen der Erfindung wird eines der zu verbindenden Werkstückteile während des Schweißprozesses flexibel - insbesondere aufgrund des thermoplastischen Materials. Dies erlaubt das Verbinden von Werkstückteilen mit Toleranzen.

Es besteht keine Notwendigkeit eines schnellen Umschaltens zwischen Schritten des Verfahrens.

Es besteht keine Notwendigkeit eines Zwischenkühlens von Werkstückteilen.

Es besteht keine Notwendigkeit für eine Hochgeschwindigkeitsbewegung von Teilen.

Es sind keine komplexen Bewegungswerkzeuge oder Bewegungseinrichtungen notwendig. Auch ein Schweißen von komplexen Teilen ist mit Ausgestaltungen der Erfindung möglich.

Im Folgenden werden einige Vorteile des Verfahrens, der Vorrichtung und der Anordnung gemäß der erfindungsgemäßen und/oder vorteilhaften Ausgestaltungen im Vergleich zu Laserstrahlschweißen erläutert:
Die Infrarotlichtquelle zum Erzeugen der hier eingesetzten Infrarotlichtstrahlung ist kostengünstiger und weitaus einfacher als ein Laser, wie er zum Schweißen benötigt wird.

Es besteht die Möglichkeit, Wellenlängen im Bereich zwischen 1000 bis 2000 nm (insbesondere Wellenlängen im Bereich IR-B oder IR-C) mit einer höheren Energieeindringungsrate oder Energiedurchdringungsrate in dem zu verbindenden Thermoplast-Werkstückteil zu verwenden.

Es sind keine spezifischen Schutzeinrichtungen gegen die Strahlung notwendig.

Eine gleichzeitige Erhitzung des gesamten Schweißbereiches ist mit einer einfachen Ausrüstung möglich.

Im Vergleich zu einem z.B. aus [3] bekannten Konduktionsschweißen weisen das Verfahren, die Vorrichtung und die Anordnung der Erfindung und/oder deren vorteilhaften Ausgestaltungen insbesondere folgende Vorteile auf:
Die Heizenergie durchdringt die Werkstückteile innen nicht nur durch Konduktion, sondern zumindest partiell auch mittels Lichtenergietransmission.

Es ist eine wesentliche Reduzierung der Heizzeit möglich.

Das Schweißen erfolgt mit erhöhter Effizienz.

Die hier dargestellte Infrarot-Durchstrahlschweißtechnologie könnte für unterschiedliche Bereiche angewendet werden, wie zum Beispiel:
- Längs- und Umfangsverbindungen;
- Schweißen von Clips, Klemmen, Klanten und Befestigungselementen an einer Fahrzeughaut;
- Schweißen von Clips, Klemmen, Klanten und Befestigungselementen an ein Rahmenelement;
- Schweißen von Rahmenelementen;
- Schweißen eines Rahmenfußes an ein Hautelement;
- Schweißen von Stringern oder Spannten an ein Hautelement;
- Schweißen von Fensterrahmenstrukturkomponenten;
- Schweißen von Türumgebungsstrukturkomponenten;
- Schweißen von Bodenstrukturen;
- Schweißen von Halterungen, Bügeln und Halteelementen;
- Schweißen von Kupplungselementen wie zum Beispiel Rahmenkupplungen, Stringerkupplungen usw.

Im Folgenden werden Ausführungsbeispiele der Erfindung anhand der beigefügten Zeichnungen näher erläutert. Dabei zeigen:
Fig. 1 eine schematische Schnittdarstellung einer ersten Ausführungsform einer Durchstrahlschweißanordnung zum Durchführen eines Durchstrahlschweißverfahrens bei dem ein erstes Werkstückteil und ein zweites Werkstückteil zu einem Werkstück verschweißt werden;
Fig. 2 eine schematische Schnittdarstellung vergleichbar der Fig. 1 einer zweiten Ausführungsform der Durchstrahlschweißanordnung;
Fig. 3 eine schematische Schnittdarstellung vergleichbar mit der Fig. 1 der Durchstrahlschweißanordnung im Verlauf des Durchstrahlschweißverfahrens, wobei thermoplastisches Material an einer Schweißstelle, an der das erste Werkstückteil mit dem zweiten Werkstückteil zu verbinden ist, geschmolzen oder plastifiziert ist;
Fig. 4 eine schematische Schnittdarstellung vergleichbar der Fig. 3 einer dritten Ausführungsform der Durchstrahlschweißanordnung;
Fig. 5 eine schematische Schnittdarstellung vergleichbar der Fig. 3 einer vierten Ausführungsform der Durchstrahlschweißanordnung;
Fig. 6 eine schematische Schnittdarstellung vergleichbar der Fig. 3 einer fünften Ausführungsform der Durchstrahlschweißanordnung;
Fig. 7 eine schematische Schnittdarstellung vergleichbar der Fig. 3 einer sechsten Ausführungsform der Durchstrahlschweißanordnung;
Fig. 8 eine schematische Schnittdarstellung vergleichbar der Fig. 3 einer siebten Ausführungsform der Durchstrahlschweißanordnung;
Fig. 9 eine schematische Schnittansicht durch ein erstes Ausführungsbeispiel des Werkstückes, dessen Werkstückteile Hautelemente eines Luftfahrzeuges sind, die an einer Längsnaht miteinander verschweißt werden;
Fig. 10 ein weiteres Ausführungsbeispiel für das Werkstück, wobei ein Befestigungselement an ein Hautelement eines Luftfahrzeuges angeschweißt wird;
Fig. 11 ein weiteres Ausführungsbeispiel für das Werkstück, wobei ein Kupplungselement zum Verbinden zweier Strukturbauteile eines Luftfahrzeuges anzuschweißen ist;
Fig. 12 ein weiteres Ausführungsbeispiel für das Werkstück, wobei ein Versteifungselement an ein Hautelement eines Luftfahrzeuges anzuschweißen ist;
Fig. 13 eine stark schematisierte Querschnittsansicht durch ein Rumpfbauteil für ein Luftfahrzeug mit unterschiedlichen Beispielen für Schweißverbindungen, die mit dem Durchstrahlschweißverfahren und der Durchstrahlschweißanordnung gemäß dem Ausführungsbeispielen der Erfindung hergestellt worden sind; und
Fig. 14 eine schematische Ansicht eines Fahrzeugs am Beispiel eines Luftfahrzeuges, wobei unterschiedliche mögliche Anwendungen des Durchstrahlschweißverfahrens und der Durchstrahlschweißanordnung gemäß Ausführungsbeispielen der Erfindung dargestellt sind.

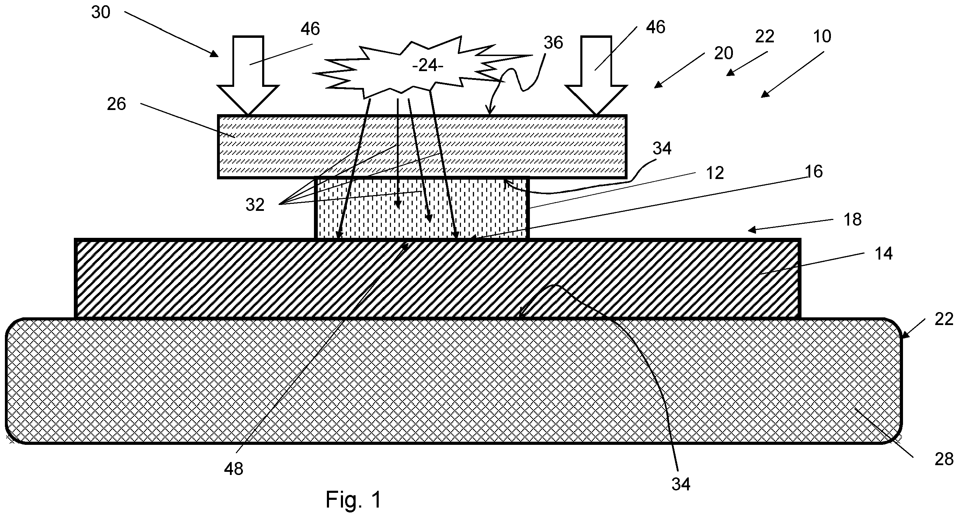

In den Fig. 1 bis 8 sind unterschiedliche Ausführungsformen einer Durchstrahlschweißanordnung 10 zum Durchführen eines Durchstrahlschweißverfahrens dargestellt. Die Durchstrahlschweißanordnung 10 weist ein erstes Werkstückteil 12 und ein zweites Werkstückteil 14, die durch das Durchstrahlschweißverfahren an einer Schweißstelle 16 miteinander zu einem Werkstück 18 zu verbinden sind, und eine Durchstrahlschweißvorrichtung 20 zum Durchführen des Schweißens der Werkstückteile 12, 14 mittels Infrarot-Durchstrahlschweißen auf.

Zumindest das erste Werkstückteil 12 oder beide Werkstückteile 12, 14 sind zumindest bereichsweise, insbesondere an der Schweißstelle 16, aus einem thermoplastischen Material gebildet.

Das thermoplastische Material ist vorzugsweise ein thermoplastisches Faserverbundmaterial. Bei einer Ausgestaltung weist wenigstens eines der Werkstückteile 12, 14, vorzugsweise beide Werkstückteile 12, 14 Endlosfasern (nicht dargestellt) in einer thermoplastischen Matrix auf.

Das erste Werkstückteil 12 ist ausgewählt aus einer Gruppe, die ein faserverstärktes Kunststoffbauteil, ein Bauteil mit einer Matrix aus thermoplastischen Material, ein Bauteil mit einer Matrix aus PPS, ein Bauteil mit einer Matrix aus PEKK, ein Bauteil mit einer Matrix aus PEEK, ein Bauteil mit einer Matrix aus PA, ein Bauteil mit einer Matrix aus PEI, ein Bauteil mit einer Matrix aus LM PAEK, ein Bauteil mit einer Matrix PBI, ein Bauteil mit einer Matrix PE, ein Bauteil mit Verstärkungsfasern in Form eines Gewebes, ein Bauteil mit Verstärkungsfasern in Form eines Geleges, ein Bauteil mit Verstärkungsfasern in Form von unidirektionalen Fasern, ein Bauteil mit Verstärkungsfasern in Form von Kurzfasern, ein Bauteil mit Verstärkungsfasern in Form von Endlosfasern, ein Bauteil mit Verstärkungsfasern aus Kohlenstoff, ein Bauteil mit Verstärkungsfasern aus Glas oder Glaswerkstoffen, ein Bauteil mit Verstärkungsfasern aus Endloskohlenstofffasern, ein Bauteil mit Verstärkungsfasern aus Endlosglasfasern; ein Bauteil mit Verstärkungsfasern aus Kohlenstoff- oder Glaskurzfasern, ein Bauteil mit Verstärkungsfasern aus Aramidfasern, ein Bauteil mit Verstärkungsfasern aus Seide, ein Bauteil mit Verstärkungsfasern aus Fasern aus einer biologischen Quelle, ein Bauteil mit Verstärkungsfasern aus Keramik, und ein Bauteil aus Endlosfasern sowie beliebige Kombinationen dieser Materialangaben umfasst. Beispiele für Fasern aus einer biologischen Quelle wären z.B. Seide oder Fasern von Spinnen.

Das zweite Werkstückteil 14 ist ausgewählt aus einer Gruppe, die ein faserverstärktes Kunststoffbauteil, ein Bauteil mit einer Matrix aus thermoplastischen Material, ein Bauteil mit einer Matrix aus PPS, ein Bauteil mit einer Matrix aus PEKK, ein Bauteil mit einer Matrix aus PEEK, ein Bauteil mit einer Matrix aus PA, ein Bauteil mit einer Matrix aus PEI, ein Bauteil mit einer Matrix aus LM PAEK, ein Bauteil mit einer Matrix PBI, ein Bauteil mit einer Matrix PE, ein Bauteil mit Verstärkungsfasern in Form eines Gewebes, ein Bauteil mit Verstärkungsfasern in Form eines Geleges, ein Bauteil mit Verstärkungsfasern in Form von unidirektionalen Fasern, ein Bauteil mit Verstärkungsfasern in Form von Kurzfasern, ein Bauteil mit Verstärkungsfasern in Form von Endlosfasern, ein Bauteil mit Verstärkungsfasern aus Kohlenstoff, ein Bauteil mit Verstärkungsfasern aus Glas oder Glaswerkstoffen, ein Bauteil mit Verstärkungsfasern aus Endloskohlenstofffasern, ein Bauteil mit Verstärkungsfasern aus Endlosglasfasern; ein Bauteil mit Verstärkungsfasern aus Kohlenstoff- oder Glaskurzfasern, ein Bauteil mit Verstärkungsfasern aus Aramidfasern, ein Bauteil mit Verstärkungsfasern aus Seide, ein Bauteil mit Verstärkungsfasern aus Fasern aus einer biologischen Quelle, ein Bauteil mit Verstärkungsfasern aus Keramik, und ein Bauteil aus Endlosfasern sowie beliebige Kombinationen dieser Materialangaben umfasst.

Die Durchstrahlschweißvorrichtung 20 weist eine Spanneinrichtung 22 zum Verspannen des ersten Werkstückteils 12 und des zweiten Werkstückteils 14 und eine Infrarotlichtquelle 24 zum Erzeugen einer einfachen Infrarotlichtstrahlung, d. h. keiner Laserstrahlung sondern einer polychromatischen und inkohärenten Infrarotlichtstrahlung, auf.

Die Spanneinrichtung 22 weist ein Spannelement 26, ein Gegenspannelement 28 und eine durch Pfeile angedeutete Spannkrafterzeugungseinrichtung 30 auf, mittels der das Spannelement 26 relativ zu dem Gegenspannelement 28 bewegbar ist und mittels der ein Spanndruck zwischen dem Spannelement 26 und dem Gegenspannelement 28 erzeugbar ist.

Das Spannelement 26 ist zumindest in einem Bereich, mit dem es das erste Werkstückteil 12 erfasst, aus einem für die Infrarotlichtstrahlung 32 transparenten Material ausgebildet. Das Spannelement 26 weist eine Spannfläche 34, mittels der das erste Werkstückteil 12 erfasst, und eine der Spannfläche 34 entgegengesetzte Rückseite 36 auf. Zwischen der Spannfläche 34 und der Rückseite 36 ist das Spannelement 26 zumindest bereichsweise für die Infrarotlichtstrahlung 32 transparent.

Die Infrarotlichtquelle 24 ist auf der Rückseite 36 angeordnet und dazu ausgebildet, die Infrarotlichtstrahlung 32 durch das Spannelement 26 hindurch auf das erste Werkstückteil 12 zu leiten.

Bei einigen Ausgestaltungen, insbesondere wie sie in der Fig. 1 bis 5 gezeigt sind, ist das Spannelement 26 aus einem starren Material, wie z. B. Glas, insbesondere temperaturbeständigem Glas, gebildet und kann als Spannbacke oder Druckplatte ausgebildet sein.

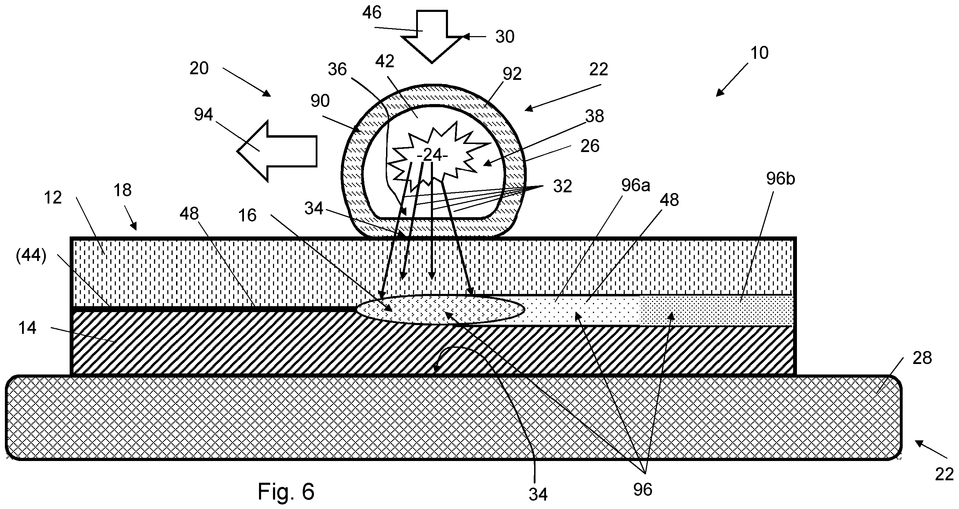

Bei anderen Ausgestaltungen, wie in Fig. 6 gezeigt, ist das Spannelement 26 zumindest in einem Bereich, insbesondere an einem die Spannfläche 34 zumindest teilweise bildenden Bereich, aus einem flexiblen Material, wie z. B. silikonhaltigen Werkstoff gebildet und weist so beispielsweise einen flexiblen Hautbereich zum Anliegen an dem Werkstück 18, insbesondere an dem ersten Werkstückteil 12, auf.

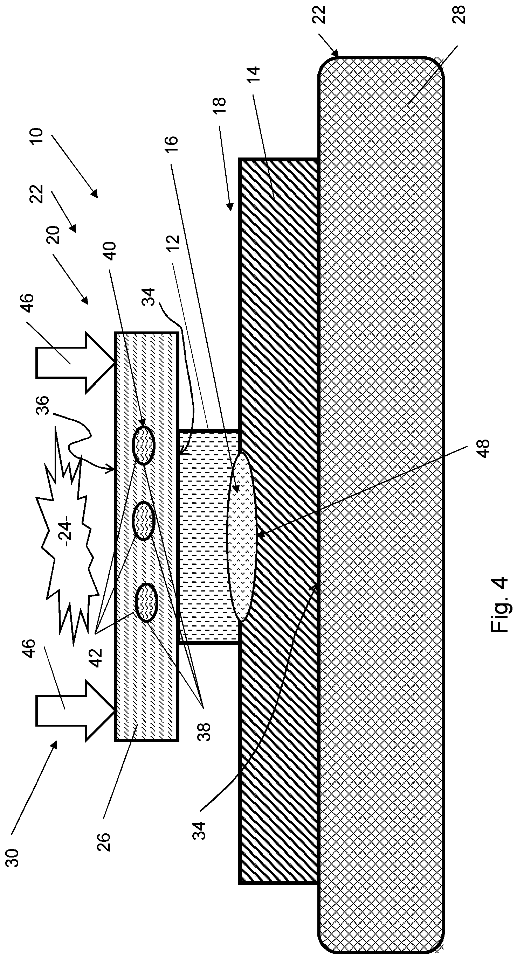

Bei einer Ausgestaltung, wie sie in Fig. 4 dargestellt ist, weist das Spannelement wenigstens einen Fluidhohlraum 38 für ein Fluidmedium 40 auf. Insbesondere sind mehrere Kanäle 42 ausgebildet, die durch Fluidmedium 40, welches durch eine eine Heizeinrichtung und/oder eine Kühleinrichtung aufweisende Temperiereinrichtung temperiert werden kann und mittels einer Pumpe oder dergleichen Druckerzeugungseinrichtung unter gesteuerten Fluiddruck gesetzt werden kann, durchflossen wird. Bei dieser Ausgestaltung nach Fig. 4 kann das Spannelement 26 anstelle aus einem starren Material zumindest teilweise aus flexiblem Material gebildet sein.

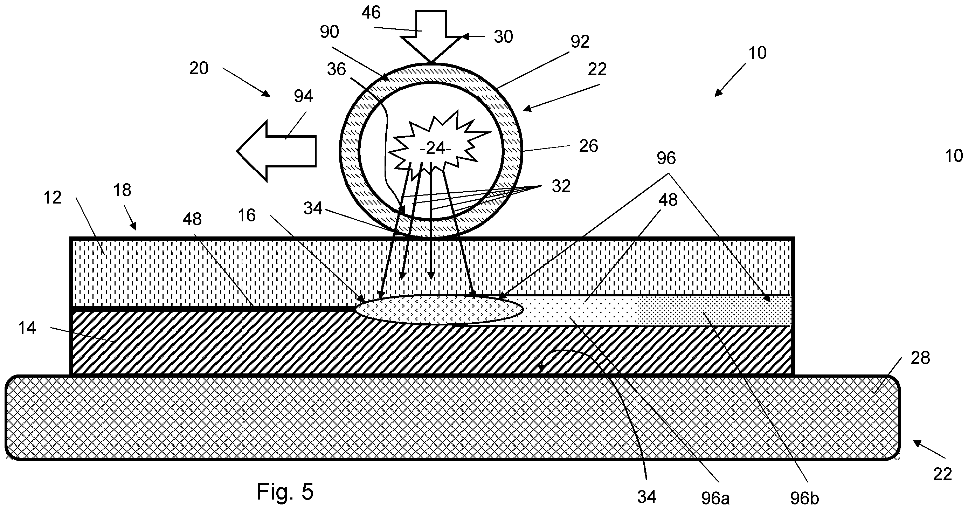

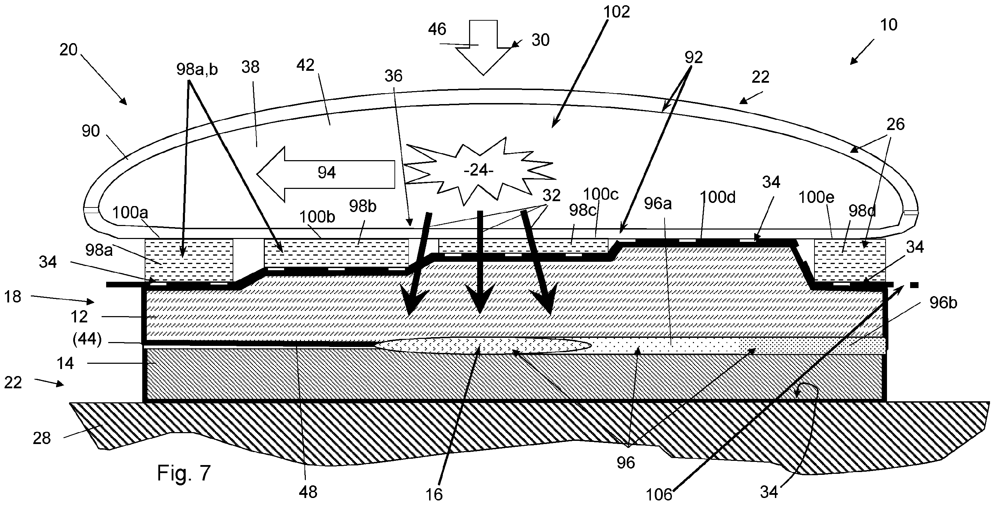

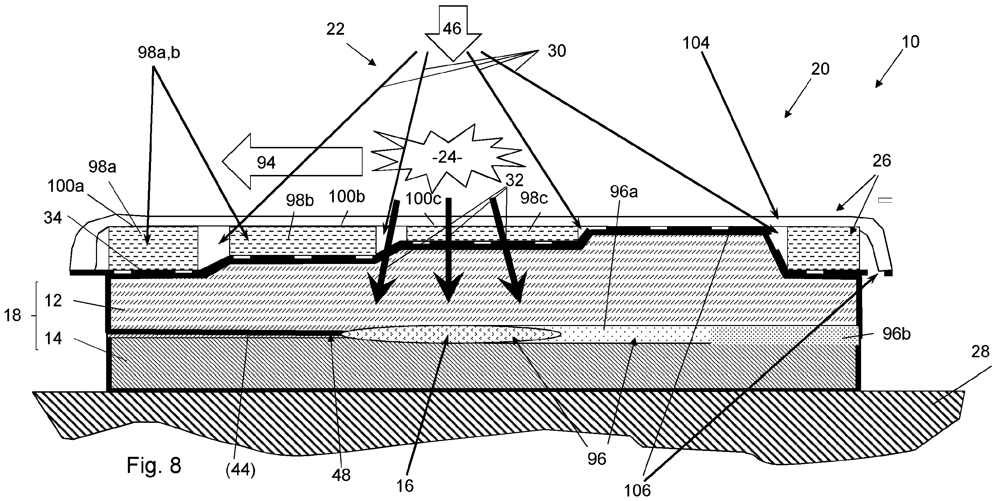

Bei den in den Fig. 1 bis 4 dargestellten Ausführungsformen ist das Spannelement 26 als Druckplatte oder Spannbacke ausgebildet. Bei den in den Fig. 5 und 6 dargestellten Ausführungsformen ist das Spannelement 26 als Rollkörper 90, beispielsweise in Form einer Kugel, einer Walze, einer Rolle oder Röhre 92, ausgebildet, der um eine Drehachse drehbar ist. Bei diesen Ausgestaltungen ist die Spannfläche 34 am Außenumfang des Rollkörpers 90 ausgebildet, während die Innenseite des Rollkörpers 90 die Rückseite 36 bildet. Die wenigstens eine Infrarotlichtquelle 24 ist bei diesen Ausführungsformen im Inneren des Rollkörpers 90 angeordnet. Bei den Ausgestaltungen nach den Fig. 7 und 8 weist das Spannelement 26 starre Komponenten und flexible Komponenten auf.

Bei einigen Ausgestaltungen ist das Gegenspannelement 28 als feste Unterlage oder Auflage, beispielsweise als Spanntisch oder als kleinere feste Auflage, ausgebildet. Die Spannkrafterzeugungseinrichtung 30 ist dazu ausgebildet, das Spannelement 26 mit einer definierten Kraft gegen das Gegenspannelement 28 zu fahren.

Bei einer größeren Ausgestaltung kann das Gegenspannelement 28 an einem Maschinentisch fix befestigt sein, während das Spannelement 26 mittels eines hydraulischen oder pneumatischen Zylinders oder eines sonstigen Aktors, beispielsweise eines Elektromotors mit Gewindestange, gegen das Gegenspannelement 28 gefahren werden kann. Bei einer anderen besonders einfach und kompakt ausgebildeten Durchstrahlschweißvorrichtung 20 können das Spannelement 26 und das Gegenspannelement 28 als Backen einer Art Zarge ausgebildet sein.

Bei Ausgestaltungen der Durchstrahlschweißvorrichtung 20, die besonders gut für die Durchführung eines kontinuierlichen Durchstrahlschweißverfahrens geeignet ist, weist die Durchstrahlschweißvorrichtung 20 eine Bewegungseinrichtung 94 zum relativen Bewegen des Spannelements 26 relativ zu dem Gegenspannelement 28 und somit zum Bewegen des Spannelements 26 über das Werkstück 18 auf. Beispiele dieser Ausgestaltungen sind in den Fig. 5 bis 8 dargestellt.

Fig. 1 zeigt eine erste Ausführungsform der Durchstrahlschweißanordnung 10, wobei das erste Werkstückteil 12 und das zweite Werkstückteil 14 unmittelbar aufeinander liegen und die Infrarotlichtstrahlung 32 in einem Spektrum mit Wellenlängen in einem Bereich, für den das erste Werkstückteil 12 zumindest bis 2 %, mehr bevorzugt 10 bis 20 %, am meisten bevorzugt bis zu 30 %, transparent ist. Die verbleibende Infrarotlichtstrahlung 32 wird in dem ersten Werkstückteil 12 absorbiert und in Wärme umgewandelt, welche das thermoplastische Material des ersten Werkstückteils 12 erweicht. Die Schweißenergie gelangt teils durch Konduktion zu der Schweißstelle 16. Ein Teil der Infrarotlichtstrahlung 32 gelangt auch durch Transmission zu der Schweißstelle 16, die hier an den miteinander verspannten Seiten oder Flächen der Werkstückteile 12, 14 gebildet ist.

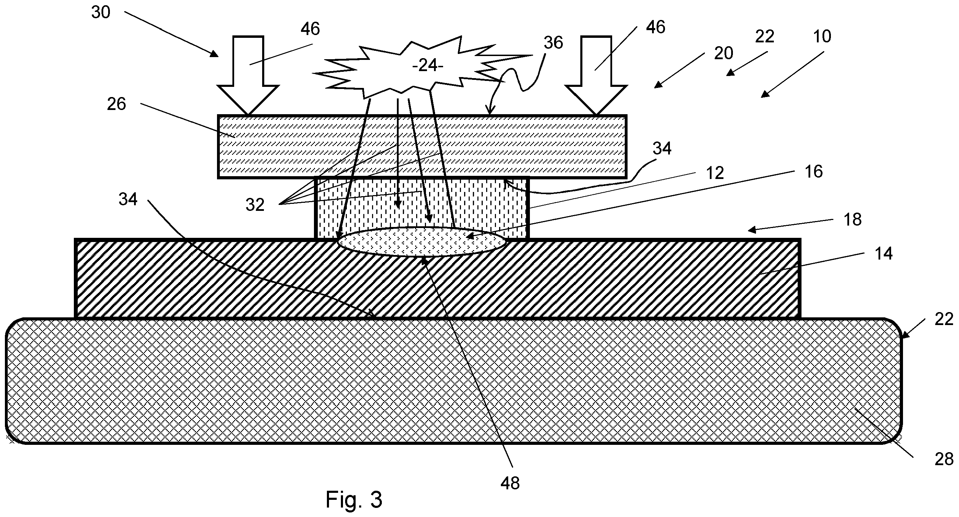

Wie in Fig. 3 dargestellt, führt dies zu einem Schmelzen des thermoplastischen Materials an der Schweißstelle 16, so dass ein Schweißen durchführbar ist.

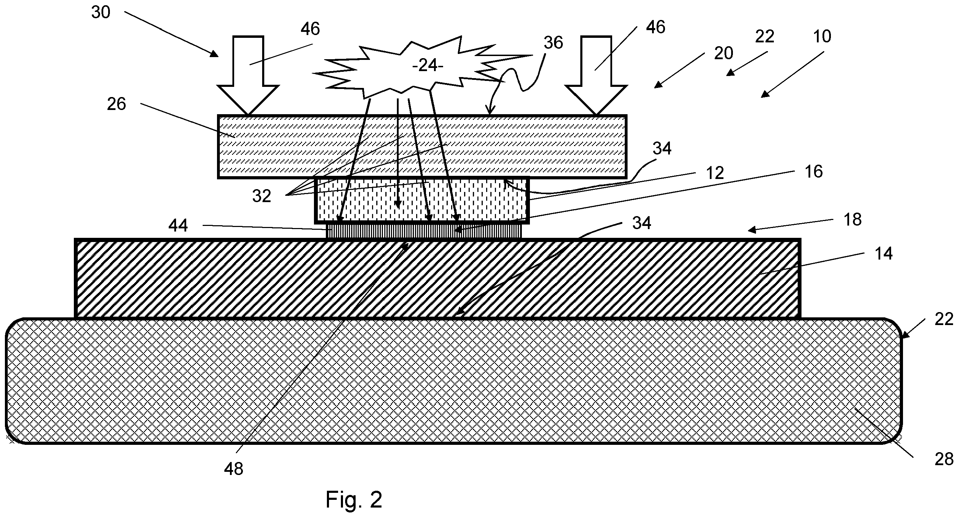

Fig. 2 zeigt eine Ausgestaltung der Durchstrahlschweißanordnung, wo zwischen den Werkstückteilen 12, 14 noch eine Zusatzschicht 44 vorgesehen wird. Die Zusatzschicht 44 kann aus thermoplastischem Material gebildet sein und somit zusätzliches Schmelzmaterial zum Verschweißen bereitstellen. Auch andere Zusatzschichten 44 sind denkbar, z.B. kann die Zusatzschicht 44 ein zu laminierendes Material oder eine Funktionsschicht aufweisen.

Bei beiden Ausführungsformen gemäß Fig. 1 und 2 erfolgt beim Schweißen die in Fig. 3 dargestellte Situation, wo entweder das thermoplastische Material der Werkstückteile 12, 14 oder das thermoplastische Material der Werkstückteile 12, 14 und der Zusatzschicht 44 an der Schweißstelle 16 durch die Infrarotlichtstrahlung 32, die teils transmissiv und teils durch Konduktion zu der Schweißstelle 16 geleitet wird, geschmolzen ist.

Fig. 4 zeigt die Ausgestaltung mit den als Kanälen 42 ausgebildeten Fluidhohlräumen 38.

Hier kann vor dem Durchführen des Schweißverfahrens beheiztes Fluidmedium 40 hindurchgeleitet werden, um die Durchstrahlschweißanordnung und insbesondere die Werkstückteile 12, 14 vorzuheizen.

Ist das Spannelement 26, wie oben ausgeführt, zumindest teilweise aus flexiblem Material gebildet, kann durch Steuern des Drucks des Fluidmediums 40 der Anpressdruck des Spannelements 26 an unterschiedlichen Bereichen der Spannfläche 34 gesteuert werden.

Nach dem Schweißen kann durch gezielte Temperierung des Fluidmediums 40 das Abkühlen und somit das Konsolidieren des an der Schweißstelle 16 geschmolzenen Materials gesteuert werden. Beispielsweise kann hier nachgeheizt werden, oder es kann eine gezielte Kühlung eingesetzt werden.

Bei einer anderen Verfahrensweise dient gekühltes Fluidmedium 40 dazu, die der Schweißstelle 16 entgegengesetzte Seite des ersten Werkstückteils 12 zu kühlen, so dass das Schmelzen des thermoplastischen Materials näher an der Schweißstelle 16 erfolgt.

Ausgestaltungen der in Fig. 4 gezeigten Ausführungsform weisen somit ein Fluidmediumsystem (nicht dargestellt), mit einem Druckerzeuger, beispielsweise einer Pumpe oder einem unter Druck stehenden Mediumreservoir, vorzugsweise automatisch steuerbaren Ventilen und einer vorzugsweise automatisch steuerbaren Temperiereinrichtung - z.B. Heiz- und/oder Kühleinrichtung - auf. Das Fluidmediumsystem kann ein Hydraulikkreislauf für Öl oder Wasser oder ein Druckgassystem, beispielsweise Druckluftquelle zum Liefern von Druckluft, Kühlluft und/oder Heizluft aufweisen.

Einige Ausgestaltungen der Durchstrahlschweißvorrichtung 20 weisen eine Steuerung zum Steuern der Infrarotlichtquelle 24, der Spannkrafterzeugungseinrichtung 30 und gegebenenfalls des Fluidmediumsystems und/oder der Bewegungseinrichtung 92 auf.

Bei der in Fig. 5 dargestellten vierten Ausführungsform ist das Spannelement 26 als Rollkörper 90 in Form einer Röhre 92 aus einem starren Material, wie insbesondere Glas, welches für die Infrarotlichtstrahlung 32 transparent ist, ausgebildet, und eine oder vorzugsweise mehrere Infrarotlichtquellen 24 sind über die Länge der Röhre 92 hinweg im Inneren derselben angeordnet. Die Röhre 92 ist in nicht dargestellter Weise drehbar gelagert und mittels der Bewegungseinrichtung 94 über das erste Werkstück 12 verfahrbar.

Die in Fig. 6 dargestellte fünfte Ausführungsform entspricht im Wesentlichen der vierten Ausführungsform mit den Unterschieden, dass die Röhre 92 zumindest im Bereich der Spannfläche 34 aus einem flexiblen Material, wie z.B. Silikon oder Polyimid (z.B. Kapton^{®}-Folie) oder Vakuumverpackungsfolie gebildet ist. Das Innere der Röhre 92 dient als Fluidhohlraum 38, in durch ein nicht näher dargestelltes Fluidmediumsystem der oben angesprochenen Art Fluidmedium - insbesondere in Form von temperierter Luft mit einem gesteuerten Druck - eingeleitet werden kann.

Bei den Ausführungsformen der Fig. 5 bis 7 können das Spannelement 26 zusammen mit der wenigstens einen Infrarotlichtquelle 24 über das Werkstück 18 verfahren werden, um so einen größeren Schweißbereich 96 kontinuierlich zu verschweißen. Der Schweißbereich 96 weist gemäß Fig. 5 bis 8 die Schweißstelle 16 mit dem gerade geschmolzenen Material und in Bewegungsrichtung hinter der Schweißstelle 16 sich bereits abkühlende Zonen 96a und 96b auf.

Bei den Ausgestaltungen nach den Fig. 7 und 8 weist das Spannelement 26 starre Segmente 98a, 98b, 98c, 98d unterschiedlicher Dicke auf. Die Dicke der Segmente 98a-98d ist an die Topologie des ersten Werkstückteiles 12 angepasst. Unebenheiten und unterschiedliche Höhen an der Oberfläche des ersten Werkstückteiles 12 lassen sich so durch die starren Segmente 98a-98d ausgleichen, so dass Druckflächenbereiche 100a-100e entstehen, die annähernd auf der gleichen Höhe angeordnet sind.

Bei der Ausgestaltung nach Fig. 7 weist das Spannelement 26 weiter die flexible Röhre 92 auf, die auf diesen Druckflächenbereichen 100a bis 100e unter Einfluss inneren Drucks 102 in der Röhre 92 - z.B. eingestellt mittels des Fluidmediums 40 - aufliegt und Druck ausübt.

Bei der Ausgestaltung nach Fig. 8 weist das Spannelement 26 eine Vakuumverpackungsfolie 104 auf. Der Bereich zwischen Vakuumverpackungsfolie 104 und erstem Werkstückteil 12 lässt sich durch eine nicht dargestellte Pumpe oder dergleichen evakuieren, so dass der Pressdruck 46 durch das Vakuum ausgeübt wird. Gleichzeitig verbindet die flexible Vakuumverpackungsfolie 104 die unterschiedlichen starren Segmente 98a-98d.

Weiter ist bei den Ausgestaltungen der Fig. 7 und 8 zwischen dem Spannelement 26, insbesondere zwischen den starren Segmenten 98a-98d und der Oberfläche des ersten Werkstückteils 12 eine Trennfolie 106 vorgesehen, die ein Anhaften des Spannelements 26 oder der Teile desselben, wie insbesondere der Segmente 98a-98d, an dem ersten Werkstückteil 12 verhindert.

Bei den Ausführungsformen der Fig. 7 und 8 weist das Spannelement 26 somit eine Kombination aus starren und flexiblen Elementen auf. Dies ist insbesondere zum Durchführen einer Schweißung entlang eines Schweißbereichs 96, 96a, 96b bei variierender Topologie des Werkstücks 18 vorteilhaft. Eine Trennfolie 106 (z.B. aus Kapton^{®} oder Silikon, ...) verhindert ein Anhaften.

Starre Segmente 98a-98d mit angepasster Dicke sind zur Übertragung des mechanischen Drucks 46 auf die unebene Oberfläche des Werkstücks 18 vorgesehen.

Bei der Ausgestaltung nach Fig. 7 wird der mechanische Druck 46 zum Aufbringen einer Schweißkraft mittels der flexiblen Röhre 92 auf die Druckflächen 100a-100e und somit über die Segmente 98a-98d oder auch bereichsweise unmittelbar auf das Werkstück 18 aufgebracht.

Fig. 8 zeigt eine andere Möglichkeit der Erzeugung der Spannkraft und des mechanischen Drucks. Hier wird der mechanische Druck 46 durch Vakuum erzeugt. Die Spannkrafterzeugungseinrichtung 30 weist somit eine (nicht dargestellte) Pumpe oder dergleichen auf. Anstelle der flexiblen Röhre 92 weist das Spannelement 26 die Vakuumverpackungsfolie 106 auf, mit der die durch das Vakuum erzeugte Spannkraft aufgebracht wird.

Bei allen Ausgestaltungen der Durchstrahlschweißanordnung 10 wird einfache, d.h. polychromatische und inkohärente Infrarotlichtstrahlung durch das Spannelement 26 und zumindest teilweise durch das erste Werkstückteil 12 zu der Schweißstelle 16 geleitet.

Im Folgenden wird eine Ausgestaltung des Durchstrahlschweißverfahrens, wie es mit den Ausführungsformen der Fig. 1 bis 4 durchführbar ist, anhand der einzelnen Prozessschritte näher erläutert.

Beide zu verbindenden Teile - erstes Werkstückteil 12 und zweites Werkstückteil 14 - werden zueinander in der beispielsweise als Klemmvorrichtung ausgebildeten Spanneinrichtung 22 zueinander positioniert.

Das in den Figuren jeweils oben dargestellte Oberteil der Spanneinrichtung 22 - das Spannelement 26 - sollte für die Infrarotlichtstrahlung transparent und eventuell flexibel ausgebildet sein.

Wie in Fig. 2 dargestellt, könnte zwischen den zu verbindenden Werkstückteilen 12, 14 wenigstens eine zusätzliche Schicht - Zusatzschicht 44 - z.B. Matrixschicht - platziert werden. Eine Zusatzschicht könnte auch bereits vor dem Schweißen in eines der beiden Werkstückteile 12, 14 integriert werden.

Anschließend wird ein mechanischer Druck 46 über die Spanneinrichtung 22 über das Spannelement 26 und das Gegenspannelement 28 ausgeübt. Das Spannelement 26 dient z.B. als transparentes Teil für die Druckaufwendung. Das Gegenspannelement 28 ist z.B. eine feste Unterlage oder ein Teil einer Klemmmechanik.

Anschließend wird die Infrarotlichtquelle 24 über dem transparenten Spannelement 26 positioniert.

Ein Infrarotheizen wird als Durchstrahlheizquelle durch das transparente Spannelement 26 auf die Außenoberfläche des ersten Werkstückteils 12 angewandt.

Die Infrarotlichtstrahlung heizt das erste Werkstückteil 12, teilweise in Form einer Oberflächenbeheizung und teilweise als durchdringende Heizenergie aufgrund von Transmission in dem ersten Werkstückteil 12 bis hin zu dem Verbindungsbereich 48 - d.h. der Schweißstelle 16 - zwischen den Werkstückteilen 12, 14.

Der Verbindungsbereich 48 und somit die Schweißstelle 16 wird großflächig erhitzt.

Die Energie der Infrarotlichtstrahlung 32 - Infrarotheizen - führt zum Heizen des Verbindungsbereichs 48 - Schweißstelle 16 - und bis zum Schmelzen des Materials der Werkstückteile 12, 14 oder gegebenenfalls der Zusatzschicht 44. Die Durchstrahlschweißanordnung 10 mit entsprechend geschmolzenem Material an der Schweißstelle 16 an dem Verbindungsbereich 48 ist in Fig. 3 dargestellt.

Fig. 4 zeigt eine optionale Möglichkeit eines Infrarotdurchgangsschweißens mit Heizunterstützung durch Fluidmedium 40.

Eines der Elemente 26, 28 der Spanneinrichtung 22, mittels welcher die Werkstückteile 12, 14 zusammengeklemmt werden, - oder beide Spannelemente 26, 28 - könnten einen oder mehrere Kanäle 42 als Fluidhohlräume 38 aufweisen.

Während des Schweißprozesses könnten in diesen Kanälen 42 ein Fluidmedium 40 zur Verbesserung der Temperatur- und Druckverteilung während des Schweißens bereitgestellt werden.

Wenn - wie bei der Ausgestaltung in Fig. 4 dargestellt - das Spannelement 26, durch welches die Infrarotlichtstrahlung 32 der Infrarotlichtquelle 24 geleitet wird, mit Kanälen 42 für das Fluidmedium 40 versehen ist, dann ist es vorteilhaft, wenn das Fluidmedium 40 ebenfalls zumindest teilweise oder zumindest zum großen Teil für die Infrarotlichtstrahlung 32 transparent ist.

Dies wird bei einer Ausgestaltung durch Verwendung von hochtemperaturresistentem Öl oder Wasser als Fluidmedium 44 erreicht.

Anschließend wird die Temperatur dieses Fluidmediums 44 gesteuert. Dies erlaubt, die Heizzeit durch ein Vorheizen des Fluidmediums 44 zu reduzieren, die Schweißzeit durch ein zusätzliches Heizen von Fluidmedium 44 zu reduzieren und/oder eine bessere Kristallinitätsrate durch ein Nachheizen oder durch eine Steuerung der Kühlgeschwindigkeit zu erreichen.

Bei einer Ausgestaltung der in Fig. 4 dargestellten Ausführungsform der Durchstrahlschweißanordnung 10 ist das mit den Kanälen 42 versehene Spannelement 26, 28, hier insbesondere das transparente Spannelement 26, zumindest im Bereich der Spannfläche 34 aus einem flexiblen Material gebildet. Ein geeignetes Material, welches auch für Infrarotlichtstrahlung 32 transparent ist, wäre Silikon oder Polyimid. Beim Gegenspannelement 28 können auch andere flexible Materialien zum Begrenzen des Kanals 42 und zum Bilden der Gegenspannfläche 34 vorgesehen sein, falls in dem Gegenspannelement 28 die Kanäle 42 oder ein Teil der Kanäle 42 vorgesehen sind.

Bei dieser Ausgestaltung wird der Druck des Fluidmediums 40 innerhalb der Kanäle 42 - insbesondere einzeln für jeden Kanal 42 - gesteuert. Dies erlaubt die Möglichkeit, den Druck über die Spannfläche 34 und somit über den kompletten Schweißbereich - Verbindungsbereich 48/Schweißstelle 16 - zu steuern.

Außerdem kann im zeitlichen Verlauf des Schweißverfahrens der Druck gesteuert werden, um so die Steuerung des Schweißprozesses durch Steuerung des Schweißdruckes mittels des Fluidmediums 40 zu verbessern.

Im Folgenden werden bevorzugte Ausgestaltungen eines kontinuierlichen Durchstrahlschweißverfahrens, wie es mit den Ausführungsformen der Durchstrahlschweißvorrichtung 20 der Fig. 5 bis 8 durchführbar ist, anhand der einzelnen Prozessschritte näher erläutert.

Zunächst werden das erste Werkstückteil 12 und das zweite Werkstückteil 14 in der Spanneinrichtung 22 zueinander positioniert, z.B. passend aufeinander auf das als Auflage ausgebildet Gegenspannelement 28 gelegt. Wie oben zu Fig. 3 erläutert kann auch hier optional die Zusatzschicht 44 eingefügt werden, auch wenn sie in Fig. 5 bis 8 nicht dargestellt ist.

Anschließend wird bei den Ausgestaltungen der Fig. 5 und 6 die Röhre 92 mit der Spannkrafterzeugungseinrichtung 30 auf das erste Werkstück 12 gepresst, um den mechanischen Druck 46 zu erzeugen. Die Infrarotlichtquellen 24 werden eingeschaltet, um die Infrarotlichtstrahlung 32 durch die Röhre 92 hindurch auf das erste Werkstückteil 12 zu leiten. Die Effekte sind die gleichen wie oben zu den Ausführungsformen des Durchstrahlschweißverfahrens anhand der Fig. 1 bis 4 beschrieben. Entsprechend wird das Material an der Schweißstelle 16 geschmolzen.

Mittels der Bewegungseinrichtung 94 wird dann das als Rollkörper 90 ausgebildete Spannelement 26 über die Oberfläche des ersten Werkstückteils 12 verfahren. Der Rollkörper 90 rollt auf der Oberfläche ab und übt dabei mit der Spannfläche 34 weiterhin den mechanischen Druck 46 auf das Werkstück 18 als Schweißdruck aus. Die im Inneren der Röhre 92 angeordneten Infrarotlichtquellen 24 werden entsprechend mitbewegt. Somit wird der Schweißbereich 96 kontinuierlich geschweißt.

Bei der in Fig. 6 dargestellten Ausführungsform kann aufgrund des flexiblen Materials der aktive Bereich der Spannfläche 34 durch Einstellen der Spannkraft und des Druckes im Inneren der Röhre 92 eingestellt werden. Wie ein Vergleich der Fig. 5 und 6 zeigt, lässt sich somit ein größerer Oberflächenbereich des Werkstücks 18 mit dem mechanischen Druck beaufschlagen. Ein ähnlicher Effekt könnte auch durch ein nach Art von Panzerketten gestütztes Spannelement 26 erreicht werden.

Bei einem mit den Ausgestaltungen nach Fig. 7 und 8 durchführbaren Verfahren wird zunächst die Trennfolie 106 aufgelegt. Höhenunterschiede werden durch starre Segmente 98a-98d mit entsprechender Dicke ausgeglichen.

Anschließend wird auch in Fig. 7 - wie oben zu Fig. 6 beschrieben - die flexible Röhre 92 zusammen mit der Infrarotlichtquelle 24 über das Werkstück 18 verfahren. Der Anpressdruck wird über den Innendruck 102 in der flexiblen Röhre 92 gesteuert.

Bei der Verfahrensweise nach Fig. 8 wird auf die starren Segmente 98a-98d und das Werkstück die Vakuumverpackungsfolie 104 aufgelegt. Der Raum zwischen der Vakuumverpackungsfolie 104 und dem Werkstück 18 wird evakuiert, um so den mechanischen Druck 46 auszuüben. Anschließend wird die Infrarotlichtquelle 24 mit der Bewegungseinrichtung 94 über das Werkstück 18 bewegt, um so das kontinuierliche Schweißen durchzuführen.

Unterschiedliche Versuche zum Durchführen des Durchstrahlschweißverfahrens sind erfolgreich durchgeführt worden.

Hierzu wurden zunächst Durchstrahluntersuchungen an verschiedenen thermoplastischen Faserverbundwerkstoffen durchgeführt. Speziell wurde ein Faserverbundmaterial mit unidirektionalen Glasfasern mit Probendicke 0,7 mm, 1,2 mm, 2,6 mm und 2,9 mm mit Infrarotlichtstrahlung mit unterschiedlicher Wellenlänge untersucht. Bei allen diesen Proben ergab sich eine signifikante Erhöhung der Transmission oberhalb von 1000 nm mit einem Peak bei ca. 1600 nm und weiterhin auch gute Transmissivitätswerte bei Wellenlängen im Bereich von 1650 nm bis 2000 nm. Auch weitere unterschiedliche thermoplastische Materialien wie PEEK und PPS, auch mit Verstärkungen durch Kohlenstofffasern oder Glasfasern, wurden untersucht. Bei allen ergab sich, dass die Transmission bei einer standardgemäßen Laserwellenlänge von 940 nm für einen Standard-Diodenlaser gering ist. Für eine derartige Laserstrahlung wird der Hauptteil der Strahlung in dem ersten Werkstückteil 12 sehr schnell absorbiert. Nur durch Konduktionswärme wird bei einer derartigen Laserstrahlung auch das zweite Werkstückteil 14 angeschmolzen. Dies führt häufig dazu, dass das erste Werkstückteil 12 komplett geschmolzen wird und somit ein definiertes Verbinden schwierig wird.

Es ist daher wünschenswert, mit Wellenlängen im Bereich um 1600 nm zu schwei-ßen, wo die thermoplastischen Materialien eine größere Transparenz aufweisen.

Die höchste Durchstrahlfähigkeit von derzeit verwendeten thermoplastischen Materialien liegt im Bereich von 1000 nm bis 1600 nm. Allerdings gibt es auf dem Markt keine Schweißlaser, die in diesem Bereich strahlen würden, und es wären sehr kostspielige Speziallaservorrichtungen notwendig. Nach DIN 5031 wird die Infrarotstrahlung in IR-A mit einer Wellenlänge von 0,78 bis 1,4 µm, IR-B mit einer Wellenlänge von 1,4 bis 3,0 µm und IR-C mit einer Wellenlänge von 3 bis 50 µm und 50 bis 1000 µm eingeteilt. IR-A und IR-B stellen den Bereich des nahen Infrarots dar. IR-A ist dabei der kurzwellige Bereich des nahen Infrarotbereichs (Kurzzeichen: NIR). Die 780-nm-Grenze ist bedingt durch den dem Sonnenspektrum angepassten menschlichen Sehsinn. Die IR-B-Strahlung stellt den langwelligen Bereich des NIR-Bereichs dar. Die Grenze zwischen IR-A und IR-B ist in der Wasserabsorption bei 1450 nm begründet.

Die Infrarotstrahlung IR-C lässt sich in das mittlere Infrarot MIR von 3 bis 50 µm und in das ferne Infrarot FIR von 50 bis 1000 µm einteilen. Das mittlere Infrarot ist der Bereich thermischer Strahlung bei irdischen Temperaturen. Beim fernen Infrarot absorbiert die Atmosphäre stark.

Besonders bevorzugt wird aufgrund der obigen Erwägungen hinsichtlich der Durchstrahlfähigkeit bestimmter Wellenlängen in thermoplastischen Materialien eine Infrarotlichtquelle 24 ausgewählt, die IR-B- und/oder IR-C-Strahlung aussendet.

Der kurzwellige Infrarotbereich (SWIR) IR-B erstreckt sich von 1,4 bis 3 µm. Dieser Bereich ist relativ augensicher, da derartiges Licht im Auge absorbiert wird, bevor es die Retina erreichen kann.

Zu Versuchen wurde eine Infrarotlampe mit einer Leistung von 400 W aus einem Infrarotheizer des Typs Adler (Seriennummer 1803 mit einer Gesamtleistung von 2x400 W, bei einer Betriebsspannung von 220 bis 240 V und einer Betriebsstromfrequenz von 50/60 Hz) herangezogen.

Eine derartige Infrarotlampe hat eine keramische Infrarotquelle. Die Infrarotquelle ist als kompakter Stab ausgeführt. Das genaue Spektrum ist nicht untersucht worden, es liegt voraussichtlich im Bereich IR-B, insbesondere zwischen 1000 bis 1600 nm.

Von den zwei Lampen dieses Heizstrahlers wurde nur eine Lampe verwendet.

Weiter weist diese Lampe einen oberen Reflektor auf, so dass die Infrarotlichtstrahlung zu einer Seite gerichtet austritt.

Die Lampe strahlt mit einem konstanten Energielevel.

Als Spannkrafterzeugungseinrichtung 30 wurden Spannklemmen herangezogen, welche eine Klemmkraft mittels mechanischer Federn erzeugt. Die genaue Klemmkraft wurde nicht gemessen.

Als transparentes Spannelement 26 wurde zunächst eine Glasplatte mit einer Dicke von ca. 1,5 mm verwendet.

Bei einem ersten Beispielsversuch wurde als erstes Werkstückteil 12 ein Stück Faserverbundmaterial mit unidirektionalen Glasfasern in einer PEKK-Matrix und einer Dicke von 1,2 mm verwendet.

Als zweites Werkstückteil 14 wurde ein Streifen Faserverbundmaterial mit unidirektionalen Kohlenstofffasern in einer PEKK-Matrix und einer Dicke von 1,8 mm verwendet.

Anschließend wurde ein Schweißen, wie in Fig. 1 dargestellt, mit folgenden Schweißparametern durchgeführt:
- Schweißenergie: 400 W
- Es wurde die komplette Länge der stabförmigen Heizlampe erhitzt.
- Das Spektrum wurde nicht ausgemessen, vermutet wird Infrarot B mit einer Wellenlänge von 1000 nm bis 1600 nm.
- Als mechanischer Druck 46 wurde nur eine Federkraft und nur lokal aufgebracht. Die genaue Klemmkraft wurde nicht gemessen.
- Das Schweißen wurde für 120 s durchgeführt.

Anschließend wurde das Schweißergebnis untersucht. Es wurde gezeigt, dass das erste Werkstückteil 12 und das zweite Werkstückteil 14 fest miteinander verbunden worden sind. Dabei ist lokal ein Anschmelzen des ersten Werkstückteils 12 festgestellt worden.

Ein Sichtvergleich mit einer entsprechenden durch Laserschweißen geschweißten Probe ergab die gleiche Schweißleistung für das Infrarot-Durchstrahlschweißen wie für ein Laserdurchstrahlschweißen.

Allerdings ist das Infrarot-Durchstrahlschweißen mit einer bedeutend kostengünstigeren Ausrüstung - einfache Infrarotlampe - durchgeführt worden, die keine spezifische Schutzmaßnahmen, wie z.B. einen Laser, benötigt.

Als zweiter Test wurde ein kontinuierlicher Schweißprozess gemäß der Ausführungsform von Fig. 5 durchgeführt. Dabei wurden gleiche Werkstückteile 12, 14 wie bei dem ersten Test verwendet, als Spannelement 26 wurde ein zylindrische Röhre 92 aus Glas verwendet, durch die als Infrarotlichtquelle 24 die oben erwähnte stabförmige Infrarotlampe durch die Röhre 92 hindurchgesteckt wurde. Anschließend wurde das Schwei-ßen mit folgenden Schweißparametern durchgeführt:
Als Infrarotlichtquelle 24 wurde eine in der Röhre 92 angeordnete Infrarotlampe verwendet. Die Infrarotlampe hatte eine Leistung von 400W und wurde über ihre komplette Länge erhitzt. Wie oben erwähnt, ist das genaue Spektrum nicht bekannt, es wird jedoch von einer Infrarot-B-Strahlung (im Bereich von 1000 bis 1600 nm ausgegangen. Die Röhre 92 bestand aus hitzewiderstandsfähigem Glas (Laternen-Glas). Der mechanische Druck wurde lokal aufgebracht. Es wurde die oben beschriebene Klemmvorrichtung mit mechanischen Klammern eingesetzt. Der genaue Klemmdruck ist nicht gemessen worden. Die Schweißzeit betrug 120s. Auch dieser Test ergab eine gute Schweißqualität.

Als weiterer Test wurde ein Schweißen durch eine Silikon-Schicht hindurch getestet, um die Leistung dieses Materials zur Verwendung für das Spannelement 26 zu testen. Der Test wurde mit den gleichen Bedingungen wie für den ersten Test durchgeführt, wobei anstelle der Glasplatte ein Streifen Silikon verwendet wurde. Auch hier wurden die Materialien miteinander geschweißt, jedoch waren die Ergebnisse schlechter als mit der Glasplatte. Es sollten demnach Silikon-Materialien entsprechend ihrem Transmissionsgrad für die verwendete Infrarotlichtstrahlung 32 ausgewählt werden. Außerdem ist es günstig, Silikon-Materialien zu verwenden, die gegenüber Temperaturen von mehr als 400°C resistent sind.

Als weiterer Test wurde der Test mit einer Kapton^{®}-Folie anstelle der Glasplatte des ersten Versuchs durchgeführt. Dies ergab sehr gute Ergebnisse, die zeigen, dass Kapton^{®} oder vergleichbare Polyimide gut zum Bilden eines flexiblen Spannelements geeignet sind. Auch andere Vakuumverpackungsfolien mit entsprechend hoher Temperaturbeständigkeit sind einsetzbar.

Polyimid ist einerseits als Material für das Spannelement 26 geeignet oder auch als Antihaftbeschichtung für das zum Beispiel aus Glas gebildete Spannelement 26. Polyimid zeigte effiziente Eigenschaften als Abziehfolie (Trennfolie 106) und vermeidet Anhaftungen von geschmolzenem thermoplastischen Material an der Oberfläche des Spannelements 26.

In einem weiteren Test wurden Werkstückteile 12, 14 aus dem Hochleistungs-Thermoplast PEKK, verstärkt durch Endloskohlenstofffasern mit den gleichen Bedingungen wie oben zu dem ersten Test beschrieben miteinander verschweißt. Auch hier ergab sich die gleiche Schweißleistung wie für ein Laserdurchstrahlschweißen.

In Tests wurde gezeigt, dass das hier dargestellte Infrarot-Durchstrahlschweißen unter Einsatz von einfachem polychromatischen, inkohärenten Infrarotlicht für unterschiedliche Materialien verwendbar ist. Es wurde erfolgreich ein Schweißen von Testmaterialien mit Endloskohlenstofffasern, Endlosglasfasern und Glaskurzfasern als Faserverstärkung durchgeführt. Das Schweißen ist auch für Materialien mit Kohlenstoffkurzfasern und unterschiedlichen anderen Fasern, wie Aramid, Seide oder anderen biologisch produzierbaren Fasern, sowohl als Lang- oder Endlosfasern oder als Kurzfasern, als Faserverstärkung geeignet. Es wurde erfolgreich ein Schweißen von Testmaterialien mit PEKK-Matrix und mit PPS-Matrix durchgeführt. Das Verfahren ist auch für LM PAEK, PEEK, PEI, PBI, PA, PE, usw. als Matrix geeignet.

Im Folgenden werden anhand der Fig. 7 bis 12 unterschiedliche mögliche Anwendungen für die zuvor erläuterten Ausgestaltungen des Infrarotdurchstrahlschweißverfahrens sowie der zuvor erläuterten Transmission zu Schweißvorrichtungen 20 näher erläutert.

Fig. 1 zeigt ein erstes mögliches Anwendungsszenario, bei dem das erste Werkstückteil 12 und das zweite Werkstückteil 14 durchgängig im Stumpfstoß miteinander verschweißt werden.

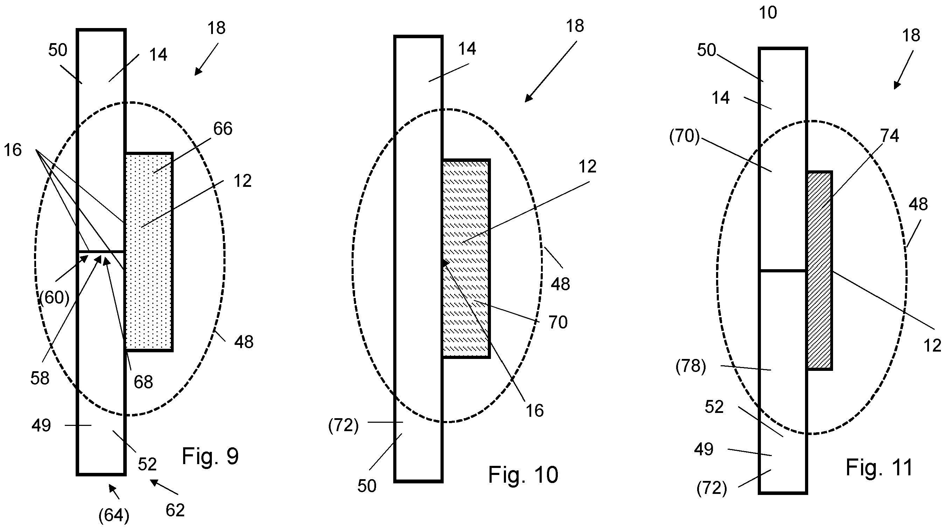

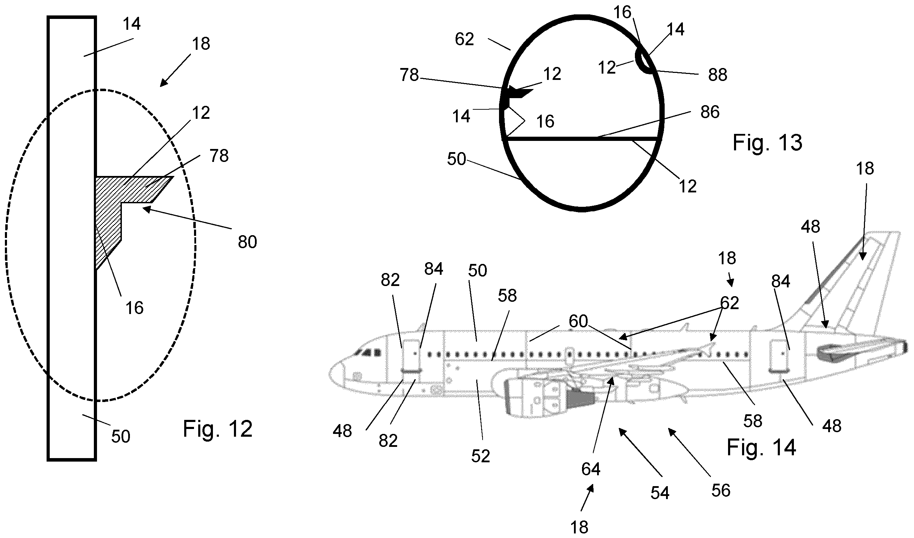

Fig. 9 zeigt ein Ausführungsbeispiel für das Werkstück 18, wobei das erste Werkstückteil 12 und das zweite Werkstückteil 14 z.B. ein erstes Hautelement 50 und ein zweites Hautelement 52 eines in Fig. 13 und 14 dargestellten Fahrzeugs in Form eines als Flugzeug 54 ausgebildeten Luftfahrzeuges ausgebildet sind. Das in Fig. 9 angedeutete Schweißen kann sowohl für Längsverbindungen 58 als auch für Umfangsverbindungen 60 von Hautelementen 50, 52 oder von sonstigen Rumpfbauteilen 62 oder von Flügelbauteilen 64 des Flugzeuges 54 eingesetzt werden.

In Fig. 9 ist der Verbindungsbereich 48 gestrichelt durch ein Oval dargestellt. Zwei Werkstückteile 14, 49 in Form von Hautelementen 50, 52 sollen im Stumpfstoß miteinander verbunden werden. In dem Anwendungsbeispiel von Fig. 9 ist als erstes Werkstückteil 12 ein Verstärkungsstreifen 66 aus thermoplastischem Faserverbundmaterial vorgesehen, welcher den Stumpfstoß zwischen dem als ersten Hautelement 50 ausgebildeten zweiten Werkstückteil 14 und einem als zweiten Hautelement 52 ausgebildeten dritten Werkstückteil 49 überdeckt. Die Hautelemente 50, 52 sind z.B. aus thermoplastischen kohlenstofffaserverstärktem Verbundmaterial (CFRP/TP) gebildet. Der als Doppler eingesetzte Verstärkungsstreifen 66 ist z.B. aus unidirektionalen Glasfasern in einer thermoplastischen Matrix oder als kohlenstofffaserverstärktem Streifen mit ebenfalls thermoplastischer Matrix ausgebildet.

Das Schweißen kann z.B. von rechts in Fig. 9 aus gesehen durch den Verstärkungsstreifen 66 hindurch erfolgen. D.h. ein transparentes Spannelement 26 wird auf den Verstärkungsstreifen 66 aufgelegt, und die Infrarotlichtstrahlung 32 wird durch das Spannelement 26 und den Verstärkungsstreifen 66 hindurch in den Stumpfstoß 68 zwischen den Hautelementen 50, 52 geleitet, um die Hautelemente 50, 52 hier zu verschweißen. Gleichzeitig werden die Hautelemente 50, 52 mit dem Verstärkungsstreifen 66 verschweißt.

Fig. 10 zeigt ein weiteres mögliches Anwendungsbeispiel, wobei als erstes Werkstückteil 12 ein Befestigungselement 70 verwendet wird und als zweites Werkstückteil 14 ein Hautelement 50 oder ein Rahmenelement 72 des Luftfahrzeugs 56 eingesetzt wird.

Das Befestigungselement 70 kann z.B. ein Clipselement, eine Befestigungsplatte, eine Klante, ein Haken, eine Befestigungsöse oder dergleichen sein. Das Befestigungselement 70 ist beispielsweise als thermoplastisches Glasfaserverbundmaterial ausgebildet. Die Glasfasern können als Kurzfasern, als unidirektionale Fasern oder als Endlosfasern vorliegen. Alternativ kann das Befestigungselement als thermoplastisches Kohlenstofffaserverbundwerkstoffteil ausgebildet sein. Auch hier können die Kohlenstofffasern unidirektional, als Kurzfasern oder als Endlosfasern ausgeführt sein.

Mögliche Materialien für das Rahmenelement 72 oder das Hautelement 50 sind wie zuvor Kohlenstofffaserverbundwerkstoffe mit thermoplastischer Matrix. Das gleiche Prinzip wie bei Fig. 10 kann auch für das Anschweißen von Bügeln oder Anbauteilen eingesetzt werden.

Fig. 11 zeigt ein weiteres Anwendungsszenario, bei dem als erstes Werkstückteil 12 ein Kupplungsteil 74 an ein Hautelement 50 oder ein Rahmenelement 72 als zweites Werkstückteil 14 angeschweißt wird. Das Kupplungsteil 74 kann danach zum Ankuppeln eines weiteren Rahmenelements 76 oder eines zweiten Hautelements 52 dienen.

Mögliche Materialien für das Kupplungsteil 74 sind thermoplastische Materialien mit Glas- oder Kohlenstofffasern. Die Fasern können unidirektional, als Endlosfasern oder in Form von Geweben oder Gelegen vorgesehen sein.

Das Rahmenelement 72 kann z.B. ein Versteifungselement, beispielsweise in Form eines Stringers 80 oder eines Spanten (nicht dargestellt), ausgebildet sein. Bevorzugte Materialien hierfür sind wiederum Kohlenstofffaserverbundwerkstoffe mit thermoplastischer Matrix. Das gleiche Prinzip wie in Fig. 11 kann auch angewandt werden für das Ankoppeln von anderen Bauteilen, wie z.B. Bodenstreben, Sitzschienen, Lagern, Türrahmen- und Fensterrahmen-Teilen oder dergleichen.

Fig. 12 zeigt ein weiteres Anwendungsszenario, wobei als erstes Werkstückteil 12 ein Versteifungselement 78, beispielsweise ein Stringer 80 - Beispiel für ein Rahmenelement 72 - an ein Hautelement 50 als zweites Werkstückteil 14 angeschweißt wird.

Fig. 13 zeigt einen stark schematisierten Querschnitt durch ein Rumpfbauteil 62 des Flugzeuges 54 mit dem Stringer 80, einem Bodenelement 86 und einem Haltebügel 88 als Beispiele für Werkstückteile 12, die mit einem Rahmenelement 52 oder einem Hautelement 50 des Rumpfbauteiles 62 mittels des Durchstrahlschweißverfahrens zu verbinden sind.

Fig. 14 zeigt die Seitenansicht auf das Flugzeug 54 als Beispiel für das Luftfahrzeug 56 mit unterschiedlichen möglichen Anwendungsbereichen für mit dem Durchstrahlschweißverfahren herzustellender Verbindungen. Beispielsweise können auch Teile 82, die eine Struktur um eine Tür 84 bilden, verschweißt werden.

Zuvorstehend sind Anordnungen, Vorrichtungen und Verfahren für ein Infrarotdurchstrahlschweißen vorgeschlagen und anhand von Ausführungsbeispielen beschrieben worden.

Damit wird eine neue Technologie vorgeschlagen, die Vorteile von Laserdurchstrahlschweißen, Konduktionsschweißen und üblichem Infrarotschweißen verbindet und mit einfacher Ausrüstung durchgeführt werden kann.

Die vorgeschlagene Technologie kann auf unterschiedliche Verbindungen angewandt werden. Beispiele hierfür sind Integration von Versteifungselementen 78, wie z.B. Stringer 80, Verbindungen und Kupplungen, Integration von Rahmen und Befestigungselementen 70, Integration von Bügeln und Haltern 88.

Die Technologie wurde mit sehr einfacher Ausrüstung erfolgreich getestet. Damit wurde die Schweißfähigkeit demonstriert. Es wurde gezeigt, dass die Infrarotenergie durch das thermoplastische erste Werkstückteil bis hin zu dem Verbindungsbereich 48 hindurch transmittieren kann.

Es wurde gezeigt, dass auch hochleistungsthermoplastische Materialien, wie z.B. PEKK, mit Faserverstärkung und Schmelztemperaturen um ca. 330 °C geschweißt werden können.

Es wurde gezeigt, dass ein Durchstrahlungsschweißen durch ein transparentes Spannelement 26, wie z.B. eine Glasplatte, möglich ist.

Auch wurde gezeigt, dass gleichzeitig Klemmkraft durch das Spannelement 26 aufgebracht werden kann.

### Bezugszeichenliste:

- 10: Durchstrahlschweißanordnung
- 12: erstes Werkstückteil
- 14: zweites Werkstückteil
- 16: Schweißstelle
- 18: Werkstück
- 20: Durchstrahlschweißvorrichtung
- 22: Spanneinrichtung
- 24: Infrarotlichtquelle
- 26: Spannelement
- 28: Gegenspannelement
- 30: Spannkrafterzeugungseinrichtung
- 32: Infrarotlichtstrahlung
- 34: Spannfläche
- 36: Rückseite
- 38: Fluidhohlraum
- 40: Fluidmedium
- 42: Kanal
- 44: Zusatzschicht
- 46: Mechanischer Druck
- 48: Verbindungsbereich
- 49: drittes Werkstückteil
- 50: erstes Hautelement
- 52: zweites Hautelement
- 54: Flugzeug
- 56: Luftfahrzeug
- 58: Längsverbindung
- 60: Umfangsverbindung
- 62: Rumpfbauteil
- 64: Flügelbauteil
- 66: Verstärkungsstreifen
- 68: Stumpfstoß
- 70: Befestigungselement
- 72: Rahmenelement
- 74: Kupplungsteil
- 76: weiteres Rahmenelements
- 78: Versteifungselement
- 80: Stringer
- 82: Teil einer Umgebungsstruktur für Tür
- 84: Tür
- 86: Bodenelement
- 88: Haltebügel
- 90: Rollkörper
- 92: Röhre
- 94: Bewegungseinrichtung
- 96: Schweißbereich
- 96a: wärmere Zone des Schweißbereichs
- 96b: kältere Zone des Schweißbereichs
- 98a: erstes starres Segment
- 98b: zweites starres Segment
- 98c: drittes starres Segment
- 98d: viertes starres Segment
- 100a: erster Druckflächenbereich
- 100b: zweiter Druckflächenbereich
- 100c: dritter Druckflächenbereich
- 100d: vierter Druckflächenbereich
- 100e: fünfter Druckflächenbereich
- 102: innerer Druck
- 104: Vakuumverpackungsfolie
- 106: Trennfolie

## Patentansprüche

1. Durchstrahlschweißverfahren zum Verschweißen eines zumindest teilweise aus thermoplastischem Werkstoff gebildeten ersten Werkstückteils (12) an einer Schweißstelle (16) mit wenigstens einem zweiten Werkstückteil (14), umfassend:
a) Verspannen des ersten Werkstückteils (12) und des zweiten Werkstückteils (14) mittels wenigstens eines Spannelements (26), welches zumindest teilweise für die Infrarotlichtstrahlung (32) transparent ist;
b) Leiten einer polychromatischen, inkohärenten Infrarotlichtstrahlung (32) durch das Spannelement (26) zu dem ersten Werkstückteil (12) und durch das erste Werkstückteil (12) zu der Schweißstelle (16), wobei zumindest ein Bereich des ersten Werkstückteils (12) oder das gesamte erste Werkstückteil (12) aus einem thermoplastischen Faserverbundmaterial gebildet ist und die Infrarotlichtstrahlung (32) durch das Faserverbundmaterial zu der Schweißstelle (16) geleitet wird,
**gekennzeichnet durch**
c) Einstellen einer Temperatur des Spannelements (26) vor, während und/oder nach Schritt b), um die Temperatur wenigstens eines Bereichs des Werkstücks (18) zu beeinflussen.

2. Durchstrahlschweißverfahren nach Anspruch 1, **gekennzeichnet durch**
2.1 Erzeugen der polychromatischen, inkohärenten Infrarotlichtstrahlung (32) durch eine Infrarotlampe; und/oder
2.2 Erzeugen der Infrarotlichtstrahlung (32) in einem Wellenlängenbereich von 1,0 bis 3,0 µm.

3. Durchstrahlschweißverfahren nach einem der vorhergehenden Ansprüche, **gekennzeichnet durch**
3.1 Bewegen der Infrarotlichtstrahlung (32) über das erste Werkstückteil (12), um die Werkstückteile (12, 14) kontinuierlich entlang eines Schweißbereichs zu schweißen; und/oder
3.2 Bewegen einer die Infrarotlichtstrahlung erzeugenden Infrarotlichtquelle über das erste Werkstückteil (12), um die Werkstückteile (12, 14) entlang eines Schweißbereichs.

4. Durchstrahlschweißverfahren nach einem der vorhergehenden Ansprüche, **dadurch gekennzeichnet,**
**dass** Schritt a) umfasst:
4.1 Aufpressen des Spannelements (26) auf das erste Werkstückteil (12); und/oder
4.2 Verwenden einer Druckplatte oder Spannbacke als Spannelement (26).

5. Durchstrahlschweißverfahren nach einem der vorhergehenden Ansprüche, **dadurch gekennzeichnet,**
**dass** Schritt a) umfasst:
Verwenden eines Spannelements (26) aus einem Material, das ausgewählt ist aus der Gruppe aus Materialien, die ein flexibles Material, ein starres Material, Glas, transparenter Kunststoff, Polyimid, Vakuumpackfolie und Silikon, sowie Kombinationen dieser Materialien umfasst.

6. Durchstrahlschweißverfahren nach einem der vorhergehenden Ansprüche, **dadurch gekennzeichnet,**
**dass** Schritt a) umfasst:
6.1 Verwenden eines Spannelements (26) mit wenigstens einem mit einem Fluidmedium (40) befüllten oder befüllbaren Fluidmediumhohlraum (38);
6.2 Verwenden eines flexiblen Spannelements (26) und Steuern des Anpressdrucks des flexiblen Spannelements (26) mittels eines Druckfluids.

7. Durchstrahlschweißverfahren nach Anspruch 6,
**dadurch gekennzeichnet,**
**dass** Schritt a) und/oder Schritt c) wenigstens einen oder mehrere der Schritte umfasst:
7.1 Verwenden eines Spannelements (26) mit wenigstens einem Kanal (42) und Leiten eines temperierten Fluidmediums (40) durch den wenigstens einen Kanal (42); und/oder
7.2 Durchleiten eines für die Infrarotlichtstrahlung (32) transparenten oder transmissiven Fluidmediums (40) durch das Spannelement (26); und/oder
7.3 Steuern einer Druckverteilung mittels Steuern des Drucks des Fluidmediums (40).

8. Durchstrahlschweißverfahren nach einem der vorhergehenden Ansprüche,
**dadurch gekennzeichnet,**
**dass** Schritt a) umfasst:
8.1 Bewegen des Spannelements (26) über das erste Werkstückteil (12); und/oder
8.2 Verwenden eines um eine Drehachse drehbaren Spannelements (26); und/oder
8.3 Verwenden eines rollen-, walzen- oder kugelförmigen oder als Rollkörper (90) ausgebildeten Spannelements (26); und/oder
8.4 Rollen des Spannelements (26) über das erste Werkstückteil (12).

9. Durchstrahlschweißverfahren nach Anspruch 8,
**dadurch gekennzeichnet,**
**dass** Schritt a) umfasst:
9.1 Erzeugen der Infrarotlichtstrahlung (32) im Inneren des als Rollkörper (90) ausgebildeten Spannelements (26); und/oder
9.2 gemeinsames Bewegen einer Infrarotlichtquelle (24) und des Spannelements (26) über das erste Werkstückteil (12).

10. Durchstrahlschweißverfahren nach einem der vorhergehenden Ansprüche, **gekennzeichnet durch**
Verwenden eines Spannelements (26), das mehrere starre Segmente (98a-98d) aufweist, die vorzugsweise flexibel aneinandergelenkt sind, um die Topologie des ersten Werkstückteils (12) abzubilden.

11. Durchstrahlschweißverfahren nach einem der vorhergehenden Ansprüche, **dadurch gekennzeichnet, dass** Schritt a) und/oder Schritt c) wenigstens einen oder mehrere der Schritte umfasst:
11.1 Vorheizen des Spannelements (26) sowie des Werkstücks (18) zur Verringerung der Heizzeit für das Schweißen; und/oder
11.2 Nachheizen oder Kühlen des Spannelements (26) sowie des Werkstücks (18) zur Verbesserung der Werkstückqualität oder der Kristallisationsrate.

12. Durchstrahlschweißverfahren nach einem der voranstehenden Ansprüche, **gekennzeichnet durch** einen oder mehrere der folgenden Schritte:
12.1 Verschweißen der Werkstückteile, die jeweils ausgewählt sind aus der Gruppe, die ein faserverstärktes Kunststoffbauteil, ein Bauteil mit einer Matrix aus thermoplastischen Material, ein Bauteil mit einer Matrix aus PPS, ein Bauteil mit einer Matrix aus PEKK, ein Bauteil mit einer Matrix aus PEEK, ein Bauteil mit einer Matrix aus PA, ein Bauteil mit einer Matrix aus PEI, ein Bauteil mit einer Matrix aus LM PAEK, ein Bauteil mit einer Matrix PBI, ein Bauteil mit einer Matrix PE, ein Bauteil mit Verstärkungsfasern in Form eines Gewebes, ein Bauteil mit Verstärkungsfasern in Form eines Geleges, ein Bauteil mit Verstärkungsfasern in Form von unidirektionalen Fasern, ein Bauteil mit Verstärkungsfasern in Form von Kurzfasern, ein Bauteil mit Verstärkungsfasern in Form von Endlosfasern, ein Bauteil mit Verstärkungsfasern aus Kohlenstoff, ein Bauteil mit Verstärkungsfasern aus Glas, ein Bauteil mit Verstärkungsfasern aus Endloskohlenstofffasern, ein Bauteil mit Verstärkungsfasern aus Endlosglasfasern; ein Bauteil mit Verstärkungsfasern aus Kohlenstoff- oder Glaskurzfasern, ein Bauteil mit Verstärkungsfasern aus Aramidfasern, ein Bauteil mit Verstärkungsfasern aus Seide, ein Bauteil mit Verstärkungsfasern aus Fasern aus einer biologischen Quelle, ein Bauteil mit Verstärkungsfasern aus Keramik, umfasst;
12.2 Verschweißen des ersten Werkstückteils (12) und des zweiten Werkstückteils (14) in Überlappung oder Teilüberlappung;
12.3 Verschweißen des ersten Werkstückteils (12) und des zweiten Werkstückteils (14) im Stumpfstoß (68);
12.4 Einfügen einer Zwischenschicht (44) zwischen den Werkstückteilen (12, 14) vor dem Schweißen.

13. Verwenden eines Durchstrahlschweißverfahrens nach einem der voranstehenden Ansprüche zum
13.1 Erzeugen von Längs- (58) und/oder Umfangsverbindungen (60) an einem Fahrzeug- oder Luftfahrzeugrumpf oder Fahrzeug- oder Luftfahrzeugrumpfbauteil oder einem Fahrzeug- oder Luftfahrzeugbauteil; oder
13.2 Anschweißen von Befestigungselementen (70), Clips, Bügeln, Klammern oder Klemmen an eine Rumpfstruktur oder Haut eines Fahrzeugs oder Luftfahrzeugs (56); oder
13.3 Schweißen eines Rahmens eines Fahrzeugs oder Luftfahrzeugs (56); oder
13.4 Anschweißen einer Haut an einen Rahmen bei einem Fahrzeug oder Luftfahrzeug (56); oder
13.5 Anschweißen von Stringern (80) oder Spanten an eine Haut eines Fahrzeugs oder Luftfahrzeugs (56); oder
13.6 Schweißen von Strukturbauteilen zum Bilden einer Einfassung einer Tür (84) eines Fahrzeugs oder Luftfahrzeugs (56); oder
13.7 Schweißen von Bodenstrukturen eines Fahrzeugs oder Luftfahrzeugs (56); oder
13.8 Schweißen von Kupplungselementen (74) zum Koppeln von Strukturelementen eines Fahrzeugs oder Luftfahrzeugs (56).

## Claims

1. Transmission welding method for welding a first workpiece part (12), which is formed at least partially from thermoplastic material, to at least one second workpiece part (14) at a weld point (16), comprising:
a) bracing the first workpiece part (12) and the second workpiece part (14) by means of at least one bracing element (26) which is at least partially transparent to the infrared light radiation (32);
b) directing polychromatic, incoherent infrared light radiation (32) through the bracing element (26) to the first workpiece part (12), and through the first workpiece part (12) to the weld point (16), wherein at least one region of the first workpiece part (12) or the entire first workpiece part (12) is formed from a thermoplastic fibre composite material and the infrared light radiation (32) is directed through the fibre composite material to the weld point (16), **characterized by**
c) setting a temperature of the bracing element (26) before, during and/or after step b) in order to influence the temperature of at least one region of the workpiece (18) .

2. Transmission welding method according to Claim 1, **characterized by**
2.1 generating the polychromatic, incoherent infrared light radiation (32) by an infrared lamp; and/or
2.2 generating the infrared light radiation (32) in a wavelength range from 1.0 to 3.0 µm.

3. Transmission welding method according to one of the preceding claims, **characterized by**:
3.1 moving the infrared light radiation (32) over the first workpiece part (12) in order to weld the workpiece parts (12, 14) continuously along a welding region; and/or
3.2 moving an infrared light source generating the infrared light radiation over the first workpiece part (12) around the workpiece parts (12, 14) along a welding region.

4. Transmission welding method according to one of the preceding claims,
**characterized in that**
step a) comprises:
4.1 pressing the bracing element (26) onto the first workpiece part (12); and/or
4.2 using a pressure plate or bracing jaw as bracing element (26).

5. Transmission welding method according to one of the preceding claims,
**characterized in that**
step a) comprises:
using a bracing element (26) composed of a material selected from the group of materials which comprises a flexible material, a rigid material, glass, transparent plastic, polyimide, vacuum packaging film and silicone, and also combinations of these materials.

6. Transmission welding method according to one of the preceding claims,
**characterized in that**
step a) comprises:
6.1 using a bracing element (26) having at least one fluid medium cavity (38) filled or fillable with a fluid medium (40);
6.2 using a flexible bracing element (26) and controlling the contact pressure of the flexible bracing element (26) by means of a pressure fluid.

7. Transmission welding method according to Claim 6,
**characterized in that**
step a) and/or step c) comprises at least one or a plurality of the following steps:
7.1 using a bracing element (26) with at least one channel (42) and conducting a temperature-controlled fluid medium (40) through the at least one channel (42); and/or
7.2 conducting a fluid medium (40) that is transparent or transmissive to the infrared light radiation (32) through the bracing element (26); and/or
7.3 controlling a pressure distribution by controlling the pressure of the fluid medium (40).

8. Transmission welding method according to one of the preceding claims,
**characterized in that**
step a) comprises:
8.1 moving the bracing element (26) over the first workpiece part (12); and/or
8.2 using a bracing element (26) that is rotatable about an axis of rotation; and/or
8.3 using a bracing element (26) which is roll-shaped, roller-shaped or spherical or in the form of a rolling body (90); and/or
8.4 rolling the bracing element (26) over the first workpiece part (12).

9. Transmission welding method according to Claim 8, **characterized in that**
step a) comprises:
9.1 generating the infrared light radiation (32) in the interior of the bracing element (26) in the form of a rolling body (90); and/or
9.2 moving an infrared light source (24) and the bracing element (26) conjointly over the first workpiece part (12) .

10. Transmission welding method according to one of the preceding claims, **characterized by**:
using a bracing element (26) which has a plurality of rigid segments (98a-98d), which are preferably flexibly articulated to one another, in order to replicate the topology of the first workpiece part (12).

11. Transmission welding method according to any one of the preceding claims, **characterized in that** step a) and/or step c) comprises at least one or a plurality of the steps:
11.1 preheating the bracing element (26) and the workpiece (18) in order to reduce the heating time for the welding process; and/or
11.2 postheating or cooling the bracing element (26) and the workpiece (18) in order to improve the workpiece quality or the crystallization rate.

12. Transmission welding method according to one of the preceding claims, **characterized by** one or a plurality of the following steps:
12.1 welding the workpiece parts, in each case selected from the group comprising a fibre-reinforced plastics component, a component with a matrix composed of thermoplastic material, a component with a matrix composed of PPS, a component with a matrix composed of PEKK, a component with a matrix composed of PEEK, a component with a matrix composed of PA, a component with a matrix composed of PEI, a component with a matrix composed of LM PAEK, a component with a matrix composed of PBI, a component with a matrix composed of PE, a component with reinforcement fibres in the form of a woven fabric, a component with reinforcement fibres in the form of a scrim, a component with reinforcement fibres in the form of unidirectional fibres, a component with reinforcement fibres in the form of short fibres, a component with reinforcement fibres in the form of continuous fibres, a component with reinforcement fibres composed of carbon, a component with reinforcement fibres composed of glass, a component with reinforcement fibres composed of continuous carbon fibres, a component with reinforcement fibres composed of continuous glass fibres; a component with reinforcement fibres composed of short carbon or glass fibres, a component with reinforcement fibres composed of aramid fibres, a component with reinforcement fibres composed of silk, a component with reinforcement fibres composed of fibres from a biological source, a component with reinforcement fibres composed of ceramic;
12.2 welding the first workpiece part (12) and the second workpiece part (14) with an overlap or partial overlap;
12.3 welding the first workpiece part (12) and the second workpiece part (14) with a butt joint (68);
12.4 inserting an intermediate layer (44) between the workpiece parts (12, 14) before the welding process.

13. Use of a transmission welding method according to one of the preceding claims for
13.1 generating longitudinal (58) and/or circumferential connections (60) on a vehicle or aircraft fuselage or vehicle or aircraft fuselage component or a vehicle or aircraft component; or
13.2 welding fastening elements (70), brackets, clamps or clips to a fuselage structure or skin of a vehicle or aircraft (56); or
13.3 welding a frame of a vehicle or aircraft (56); or
13.4 welding a skin to a frame on a vehicle or aircraft (56); or
13.5 welding stringers (80) or formers to a skin of a vehicle or aircraft (56); or
13.6 welding structural components to form an enclosure for a door (84) of a vehicle or aircraft (56); or
13.7 welding floor structures of a vehicle or aircraft (56); or
13.8 welding coupling elements (74) for coupling structural elements of a vehicle or aircraft (56).

## Revendications

1. Procédé de soudage par rayonnement pour souder une première partie de pièce (12) formée au moins partiellement de matière thermoplastique à un point de soudage (16) avec au moins une deuxième partie de pièce (14), comprenant :
a) le serrage de la première partie de pièce (12) et de la deuxième partie de pièce (14) au moyen d'au moins un élément de serrage (26) qui est au moins partiellement transparent au rayonnement de lumière infrarouge (32) ;
b) la direction d'un rayonnement de lumière infrarouge polychromatique incohérent (32) à travers l'élément de serrage (26) vers la première partie de pièce (12) et à travers la première partie de pièce (12) vers le point de soudage (16), au moins une zone de la première partie de pièce (12) ou la totalité de la première partie de pièce (12) étant formée d'un matériau composite fibreux thermoplastique et le rayonnement de lumière infrarouge (32) étant dirigé à travers le matériau composite fibreux vers le point de soudage (16),
**caractérisé par**
c) l'ajustement d'une température de l'élément de serrage (26) avant, pendant et/ou après l'étape b) afin d'influencer la température d'au moins une zone de la pièce (18).

2. Procédé de soudage par rayonnement selon la revendication 1, **caractérisé par**
2.1 la production du rayonnement de lumière infrarouge polychromatique incohérent (32) par une lampe infrarouge ; et/ou
2.2 la production du rayonnement de lumière infrarouge (32) dans une plage de longueurs d'onde de 1,0 à 3,0 µm.

3. Procédé de soudage par rayonnement selon l'une quelconque des revendications précédentes, **caractérisé par**
3.1 le déplacement du rayonnement de lumière infrarouge (32) sur la première partie de pièce (12) afin de souder les parties de pièce (12, 14) en continu le long d'une zone de soudage ; et/ou
3.2 le déplacement d'une source de lumière infrarouge produisant le rayonnement de lumière infrarouge sur la première partie de pièce (12), autour des parties de pièce (12, 14) le long d'une zone de soudage.

4. Procédé de soudage par rayonnement selon l'une quelconque des revendications précédentes,
**caractérisé en ce que**
l'étape a) comprend :
4.1 le pressage de l'élément de serrage (26) sur la première partie de pièce (12) ; et/ou
4.2 l'utilisation d'une plaque de pression ou d'une mâchoire de serrage en tant qu'élément de serrage (26).

5. Procédé de soudage par rayonnement selon l'une quelconque des revendications précédentes,
**caractérisé en ce que**
l'étape a) comprend :
l'utilisation d'un élément de serrage (26) en un matériau choisi dans le groupe de matériaux comprenant un matériau flexible, un matériau rigide, du verre, du plastique transparent, du polyimide, un film d'emballage sous vide et de la silicone, ainsi que des combinaisons de ces matériaux.

6. Procédé de soudage par rayonnement selon l'une quelconque des revendications précédentes,
**caractérisé en ce que**
l'étape a) comprend :
6.1 l'utilisation d'un élément de serrage (26) avec au moins une cavité de milieu fluide (38) remplie ou pouvant être remplie avec un milieu fluide (40) ;
6.2 l'utiliser d'un élément de serrage flexible (26) et le contrôle de la pression d'application de l'élément de serrage flexible (26) au moyen d'un fluide sous pression.

7. Procédé de soudage par rayonnement selon la revendication 6,
**caractérisé en ce que**
l'étape a) et/ou l'étape c) comprend au moins une ou plusieurs des étapes :
7.1 l'utilisation d'un élément de serrage (26) avec au moins un canal (42) et la direction d'un milieu fluide conditionné en température (40) à travers l'au moins un canal (42) ; et/ou
7.2 le passage d'un milieu fluide (40) transparent ou transmissif pour le rayonnement de lumière infrarouge (32) à travers l'élément de serrage (26) ; et/ou
7.3 le contrôle d'une répartition de la pression au moyen d'un contrôle de la pression du milieu fluide (40).

8. Procédé de soudage par rayonnement selon l'une quelconque des revendications précédentes,
**caractérisé en ce que**
l'étape a) comprend :
8.1 le déplacement de l'élément de serrage (26) sur la première partie de pièce (12) ; et/ou
8.2 l'utilisation d'un élément de serrage (26) pouvant tourner autour d'un axe de rotation ; et/ou
8.3 l'utilisation d'un élément de serrage (26) configuré sous forme de rouleau, de cylindre ou de bille ou sous forme de corps roulant (90) ; et/ou
8.4 le fait de faire rouler l'élément de serrage (26) sur la première partie de pièce (12).

9. Procédé de soudage par rayonnement selon la revendication 8,
**caractérisé en ce que**
l'étape a) comprend :
9.1 la production du rayonnement de lumière infrarouge (32) à l'intérieur de l'élément de serrage (26) configuré sous forme de corps roulant (90) ; et/ou
9.2 le déplacement conjoint d'une source de lumière infrarouge (24) et de l'élément de serrage (26) sur la première partie de pièce (12).

10. Procédé de soudage par rayonnement selon l'une quelconque des revendications précédentes, **caractérisé par**
l'utilisation d'un élément de serrage (26) présentant plusieurs segments rigides (98a-98d), qui sont de préférence articulés de manière flexible les uns aux autres, pour reproduire la topologie de la première partie de pièce (12).

11. Procédé de soudage par rayonnement selon l'une quelconque des revendications précédentes, **caractérisé en ce que** l'étape a) et/ou l'étape c) comprend au moins une ou plusieurs des étapes :
11.1 le préchauffage de l'élément de serrage (26) ainsi que de la pièce (18) afin de réduire le temps de chauffage pour le soudage ; et/ou
11.2 le chauffage ultérieur ou le refroidissement de l'élément de serrage (26) ainsi que de la pièce (18) afin d'améliorer la qualité de la pièce ou le taux de cristallisation.

12. Procédé de soudage par rayonnement selon l'une quelconque des revendications précédentes, **caractérisé par** une ou plusieurs des étapes suivantes :
12.1 le soudage des parties de pièce, chacune choisie dans le groupe comprenant un composant en plastique renforcé par des fibres, un composant avec une matrice en matériau thermoplastique, un composant avec une matrice en PPS, un composant avec une matrice en PEKK, un composant avec une matrice en PEEK, un composant avec une matrice en PA, un composant avec une matrice en PEI, un composant avec une matrice en LM PAEK, un composant avec une matrice PBI, un composant avec une matrice PE, un composant avec des fibres de renforcement sous la forme d'un tissu, un composant avec des fibres de renforcement sous la forme d'une nappe, un composant avec des fibres de renforcement sous forme de fibres unidirectionnelles, un composant avec des fibres de renforcement sous forme de fibres courtes, un élément de construction avec des fibres de renforcement sous forme de fibres continues, un composant avec des fibres de renforcement en carbone, un composant avec des fibres de renforcement en verre, un composant avec des fibres de renforcement en fibres de carbone continues, un composant avec des fibres de renforcement en fibres de verre continues ; un composant avec des fibres de renforcement en fibres courtes de carbone ou de verre, un composant avec des fibres de renforcement en fibres d'aramide, un composant avec des fibres de renforcement en soie, un composant avec des fibres de renforcement en fibres provenant d'une source biologique, un composant avec des fibres de renforcement en céramique ;
12.2 le soudage de la première partie de pièce (12) et de la deuxième partie de pièce (14) en chevauchement ou en chevauchement partiel ;
12.3 le soudage de la première partie de pièce (12) et de la deuxième partie de pièce (14) en bout à bout (68) ;
12.4 l'insertion d'une couche intermédiaire (44) entre les parties de pièce (12, 14) avant le soudage.

13. Utilisation d'un procédé de soudage par rayonnement selon l'une quelconque des revendications précédentes pour
13.1 produire des liaisons longitudinales (58) et/ou circonférentielles (60) sur une coque de véhicule ou d'aéronef ou un composant de coque de véhicule ou d'aéronef ou un composant de véhicule ou d'aéronef ; ou
13.2 souder des éléments de fixation (70), des clips, des étriers, des agrafes ou des pinces sur une structure de coque ou sur la peau d'un véhicule ou d'un aéronef (56) ; ou
13.3 souder un châssis de véhicule ou d'aéronef (56) ; ou
13.4 souder une peau sur un châssis dans un véhicule ou un aéronef (56) ; ou
13.5 souder des lisses (80) ou des membrures sur une peau d'un véhicule ou d'un aéronef (56) ; ou
13.6 souder des composants structurels pour former un encadrement d'une porte (84) d'un véhicule ou d'un aéronef (56) ; ou
13.7 souder des structures de plancher d'un véhicule ou d'un aéronef (56) ; ou
13.8 souder des éléments d'accouplement (74) pour coupler des éléments structurels d'un véhicule ou d'un aéronef (56) .
